# EUROPEAN PATENT SPECIFICATION

(11) **EP 4 664 251 B1**
(45) Date of publication and mention of the grant of the patent: **23.09.2026**
(21) Application number: 25171107.3
(22) Date of filing: 16.04.2025
(51) Int. Cl.: G06F 3/045

(54) **TOUCH PANEL, METHOD FOR CONTROLLING TOUCH PANEL AND PROGRAM FOR CONTROLLING TOUCH PANEL**
BERÜHRUNGSBILDSCHIRM, VERFAHREN ZUR STEUERUNG DES BERÜHRUNGSBILDSCHIRMS UND PROGRAMM ZUR STEUERUNG DES BERÜHRUNGSBILDSCHIRMS
PANNEAU TACTILE, PROCÉDÉ DE COMMANDE DE PANNEAU TACTILE ET PROGRAMME DE COMMANDE DE PANNEAU TACTILE

(30) Priority: 10.06.2024 JP 2024093938
(43) Date of publication of application: 17.12.2025
(73) Proprietor: FCL Components Limited, Tokyo 140-0002 (JP)
(72) Inventor: ICHIKAWA, Daisuke, Shinagawa-ku, 140-0002 (JP)
(74) Representative: Haseltine Lake Kempner LLP

(56) References cited:
- US-A1- 2012 262 417
- US-A1- 2014 333 583
- US-A1- 2015 009 424

## Description

### FIELD

A certain aspect of the embodiments is related to a touch panel, a method for controlling a touch panel and a program for controlling a touch panel,

### BACKGROUND

There has been known a touch panel that detects a distance between two points in consideration of pressing values of two-point touch. There has been known a touch panel capable of detecting a contact area independent of an input position. Note that the technique related to the present disclosure is disclosed in Japanese Laid-open Patent Publication No. 2011-134316 and Japanese Laid-open Patent Publication No. 2021-179799.

Patent Application Publication No. US 2015/0009424 A1 relates to A touch panel including: a first resistance film; a second resistance film spaced apart from the first resistance film; a first electrode and a second electrode that are provided on the first resistance film, and are opposite to each other in a first direction; a third electrode and a fourth electrode that are provided on the second resistance film, and are opposite to each other in a second direction; an application unit that applies voltages to the first to the fourth electrodes, respectively; and a coordinate detection unit that, when the first resistance film comes in contact with the second resistance film at two points, detects coordinates of the two points based on a voltage applied between the first and the second electrodes, a voltage applied between the third and the fourth electrodes, and a voltage caused by a contact resistance between the first and the second resistance films.

### SUMMARY

The invention is set out in the appended set of claims.

The dependent claims set out particular embodiments.

According to a first aspect of the present disclosure, there is provided a touch panel.

According to a second aspect of the present disclosure, there is provided a method for controlling a touch panel.

According to a third aspect of the present disclosure, there is provided a program for controlling a touch panel executed by a controller included in the touch panel to execute a process.

The invention is defined in the independent claims. Specific embodiments are defined in the dependent claims. According to the present disclosure, it is possible to suppress a deviation in a distance between two points due to contact areas.

### BRIEF DESCRIPTION OF THE DRAWINGS

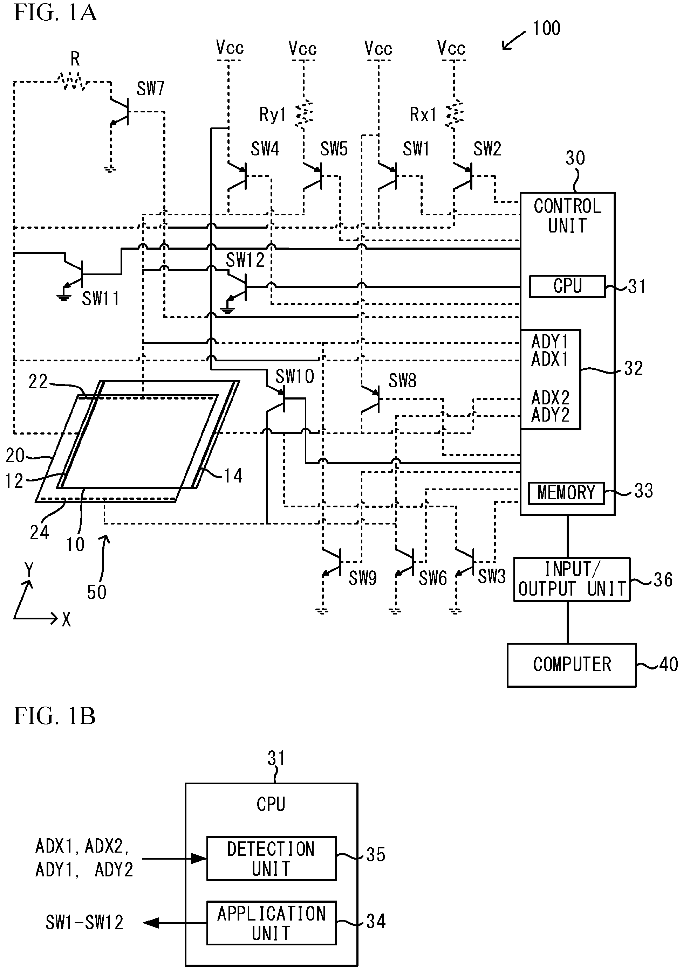

FIG. 1A is a diagram illustrating a touch panel according to an embodiment of the present embodiment.
FIG. 1B is a functional block diagram illustrating the functions of a CPU. electrodes, and the controller that controls the plurality of switches. The process characterized by including: controlling the plurality of switches so as to apply a voltage to the first electrode and the second electrode and ground the third electrode, measuring a first voltage value applied to the fourth electrode when two points are pressed on the first resistive film, controlling the plurality of switches so as to apply a voltage to the first electrode and the second electrode and ground the fourth electrode, and measuring a second voltage value applied to the third electrode when two points are pressed on the first resistive film; determining a value twice the total of the first voltage value and the second voltage value as a value corresponding to a contact area of the two points when two points are pressed on the first resistive film; controlling the plurality of switches so that the first electrode is at a high potential and the second electrode is at a low potential, applying a voltage to the first resistive film via a first voltage dividing resistor, measuring a first direction voltage applied to the first resistive film in the first direction when the two points are pressed, controlling the plurality of switches so that the third electrode is at a high potential and the fourth electrode is at a low potential, applying a voltage to the second resistive film via a second voltage dividing resistor, measuring a second direction voltage applied to the second resistive film in the second direction when the two points are pressed, and calculating a distance between the two points based on the first direction voltage and the second direction voltage; and correcting, based on the contact area of the two points and the distance between the two points when the two points are pressed by each of a plurality of input units, the distance between the two points when the two points are pressed by one of the plurality of input units having a tip with a diameter larger than a diameter of a tip of another of the plurality of input units and smaller than a diameter of a tip of the other of the plurality of input units to the distance between the two points when the two points are pressed by the another of the plurality of input units.

According to the present disclosure, it is possible to suppress a deviation in a distance between two points due to contact areas.

### BRIEF DESCRIPTION OF THE DRAWINGS

FIG. 1A is a diagram illustrating a touch panel according to an embodiment of the present embodiment.
FIG. 1B is a functional block diagram illustrating the functions of a CPU.
FIG. 2 is a flowchart illustrating a process of detecting contact point executed by the CPU.
FIG. 3A is a diagram illustrating an equivalent circuit in a case where a voltage measurement unit ADY1 measures a voltage in S5 of FIG. 2.
FIG. 3B is a diagram illustrating an equivalent circuit in a case where a voltage measurement unit ADY2 measures a voltage in S5 of FIG. 2.
FIG. 4 is a diagram illustrating voltages measured by the voltage measurement units ADY1 and ADY2 when a resistance Rs is fixed at 100 Ω and resistance values of resistances R1 and R2 are varied.
FIG. 5 is a diagram illustrating an example of two-point input.
FIG. 6 is a graph illustrating a relationship between a distance between two points in an X-axis direction and a voltage measured by a voltage measurement unit ADX1.
FIG. 7 is a flowchart illustrating a process of calculating a contact area at each contact point.
FIG. 8 is a flowchart illustrating a process of calculating a contact area at each contact point.
FIG. 9A is a diagram illustrating press patterns of two points.
FIG. 9B is a diagram illustrating voltage values measured by the voltage measurement units ADX1 and ADX2 in the state of FIG. 9A.
FIG. 9C is a diagram illustrating press patterns of two points.
FIG. 9D is a diagram illustrating voltage values measured by the voltage measurement units ADX1 and ADX2 in the state of FIG. 9C.
FIG. 10A is a diagram illustrating press patterns of two points.
FIG. 10B is a diagram illustrating voltage values measured by the voltage measurement units ADX1 and ADX2 in the state of FIG. 10A.
FIG. 10C is a diagram illustrating press patterns of two points.
FIG. 10D is a diagram illustrating voltage values measured by the voltage measurement units ADX1 and ADX2 in the state of FIG. 10C.
FIG. 11 is a diagram illustrating an example in which a plurality of two-point inputs are displayed on a display device disposed under a touch panel.
FIG. 12 is a diagram illustrating a relationship between a contact area and a distance between two points when the input points of the two-point input of FIG. 11 are pressed.
FIG. 13 is a diagram illustrating a relationship between a contact area and a distance between two points when the input points of the two-point input of FIG. 11 are pressed.
FIG. 14 is a flowchart illustrating a process of correcting a distance between two points in S10 of FIG. 2.

### DESCRIPTION OF EMBODIMENTS

In a touch panel compatible with multi-touch, when two points are touched with a pen tip having a small contact area, the coordinates of the two points at the touch positions are output. On the other hand, when fingers each having a larger contact area than the pen tip touch the two points at the same position, the coordinates of the two points at positions wider than the touch positions of the pen tip are output. This is due to the fact that the distance between two points varies according to the contact area.

The present disclosure has been made in view of the above problems, and an object thereof is to provide a touch panel, a method for controlling a touch panel, and a program for controlling a touch panel, which can suppress a deviation in a distance between two points due to contact areas.

Embodiments of the present disclosure will be described below with reference to the drawings.

FIG. 1A is a diagram illustrating a touch panel according to the present embodiment. As illustrated in FIG. 1A, a touch panel 100 includes switches SW1 to SW12, resistors R, Rx1 (first voltage dividing resistor), Ry1 (second voltage dividing resistor), resistive films 10 and 20, a control unit 30, and an input/output unit 36. The resistive films 10 and 20 form a touch panel 50 that is a part of the touch panel 100. The resistive film 10 is an upper resistive film, and the resistive film 20 is a lower resistive film. The resistive films 10 and 20 are disposed opposite to each other and overlap a display device (not illustrated) such as a liquid crystal display. An XH electrode 12 (first electrode) is provided on one side of the resistive film 10 (first resistive film), and an XL electrode 14 (second electrode) facing the XH electrode 12 is provided on the other side. A YH electrode 22 (third electrode) is provided on one side of the resistive film 20 (second resistive film), and an YL electrode 24 (fourth electrode) facing the YH electrode 22 is provided on the other side. A direction (X-axis direction) in which the XH electrode 12 and the XL electrode 14 face each other intersects a direction (Y-axis direction) in which the YH electrode 22 and the YL electrode 24 face each other, and the direction (X-axis direction) and the direction (Y-axis direction) are orthogonal to each other in FIG. 1A.

The resistive films 10 and 20 are transparent conductive films formed of, for example, ITO (Indium Tin Oxide). The resistive films 10 and 20 are formed of, for example, the same material, and the electrical resistance is substantially uniformly distributed. The XH electrode 12, the XL electrode 14, the YH electrode 22, and the YL electrode 24 are formed of a metal such as copper or aluminum.

Each of switches SW1 to SW12 is formed of a transistor. The base of the transistor of each switch is connected to the control unit 30. The emitters of the switches SW1, SW4, SW8 and SW10 are connected to a power supply voltage Vcc. The emitter of the switch SW2 is connected to the power supply voltage Vcc through a resistor Rx1. The emitter of the switch SW5 is connected to the power supply voltage Vcc through a resistor Ry1. The emitters of the switches SW3, SW6, SW7, SW9, SW11 and SW12 are grounded. The power supply voltage Vcc is, for example, 5 V.

The XH electrode 12 is connected to the collectors of the switches SW1, SW2 and SW11, and further connected to the collector of the switch SW7 through the resistor R. The XL electrode 14 is connected to the collectors of the switches SW3 and SW8. The YH electrode 22 is connected to collectors of the switches SW4, SW5, SW9 and SW12. The YL electrode 24 is connected to the collectors of the switches SW6 and SW10.

The control unit 30 is connected to a computer 40 as an external device via the input/output unit 36. The touch input data acquired by the control unit 30 is transmitted to the computer 40 via the input/output unit 36. The input/output unit 36 is an interface for transmitting and receiving data between the computer 40 and the control unit 30.

The control unit 30 includes a CPU (Central Processing Unit) 31, an AD converter 32, and a memory 33. The CPU 31 functions as a first detection unit, a second detection unit, a measurement unit, a determination unit, a calculation unit, and a correction unit. The AD converter 32 includes voltage measurement units ADX1, ADX2, ADY1, and ADY2. The voltage measurement unit ADX1 is connected to the XH electrode 12, and the voltage measurement unit ADX2 is connected to the XL electrode 14. The voltage measuring portion ADY1 is connected to the YH electrode 22, and the voltage measuring portion ADY2 is connected to the YL electrode 24. The memory 33 stores the voltages measured by the voltage measurement units ADX1, ADX2, ADY1, and ADY2, data necessary for coordinate detection, and the like.

The electric resistance of the resistor Rx1 is substantially the same as the electric resistance of the resistive film 10 between the XH electrode 12 and the XL electrode 14. The electric resistance of the resistor Ry1 is substantially the same as the electric resistance of the resistive film 20 between the YH electrode 22 and the YL electrode 24.

FIG. 1B is a functional block diagram illustrating the functions of the CPU 31. The CPU 31 functions as an application unit 34 and a detection unit 35. The application unit 34 controls voltage application to each electrode by applying voltages to the switches SW1 to SW12 and controlling ON/OFF of the switches SW1 to SW12. The detection unit 35 acquires voltages measured by the voltage measurement units ADX1, ADX2, ADY1, and ADY2, determines whether the pressing is one-point pressing or two-point pressing based on these voltages, and detects the coordinates of a midpoint between two points, the distance between two points, the direction of the line segment connecting the two points, the contact area of each contact point, and the coordinates of each contact point in the case of the two-point pressing.

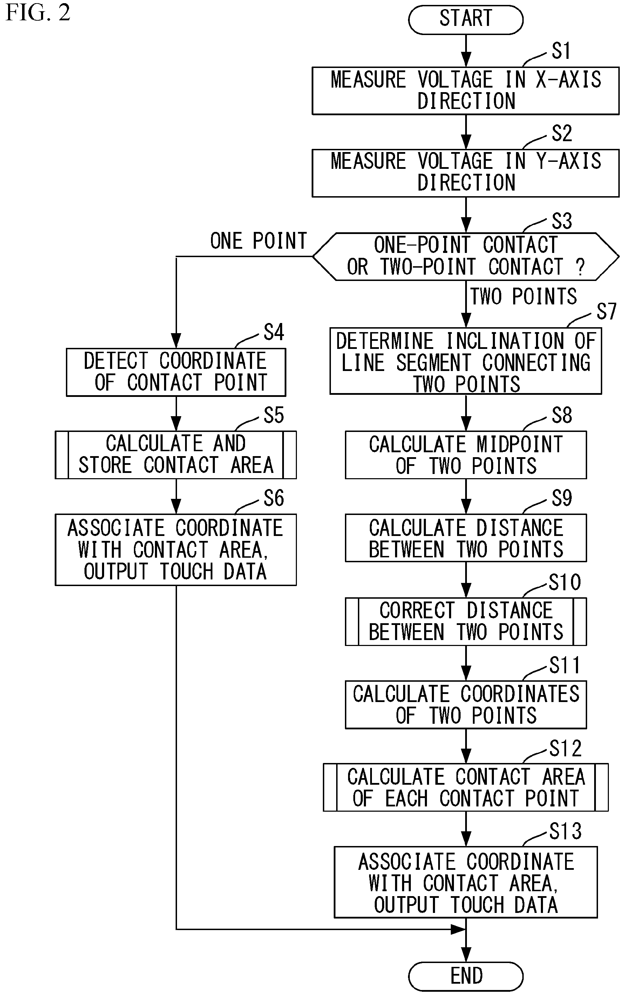

FIG. 2 is a flowchart illustrating a process of detecting the contact point executed by the CPU 31.

First, the CPU 31 measures the voltage in the X-axis direction (S1). Specifically, the CPU 31 turns on the switches SW2 and SW3 and turns off the other switches, and the voltage measurement unit ADX1 measures a voltage. In this state, the XH electrode 12 is at a high potential, and the XL electrode 14 is at a low potential. The power supply voltage Vcc is applied to the XH electrode 12 through the resistor Rx1, and the XL electrode 14 is grounded, so that a potential distribution is generated in the X-axis direction of the resistive film 10. In this state, the voltage is measured by the voltage measurement unit ADX1, and the measured voltage is stored in the memory 33. The voltage (first direction voltage) measured by the voltage measurement unit ADX1 is a value obtained by dividing the power supply voltage by the resistance Rx1 and a resistance component between the XH electrode 12 and the XL electrode 14.

Next, the voltage in the Y-axis direction is measured (S2). Specifically, the CPU 31 turns on the switches SW5 and SW6, and turns off the other switches, and the voltage measuring section ADY1 measures a voltage. In this state, the YH electrode 22 is at a high potential, and the YL electrode 24 is at a low potential. The power supply voltage Vcc is applied to the YH electrode 22 through the resistor Ry1, and the YL electrode 24 is grounded, so that a potential distribution is generated in the Y-axis direction of the resistive film 20. In this state, the voltage is measured by the voltage measurement unit ADY1, and the measured voltage is stored in the memory 33. The voltage (second direction voltage) measured by the voltage measurement unit ADY1 is a value obtained by dividing the power supply voltage by the resistance Ry1 and a resistance component between the YH electrode 22 and the YL electrode 24.

Next, the CPU 31 determines whether the contact point is one point or two points (S3). Specifically, it is determined whether the voltage measured by the voltage measurement unit ADX1 in S1 and the voltage measured by the voltage measurement unit ADY1 in S2 are Vcc/2 or less than Vcc/2. When both the voltage measured by the voltage measurement unit ADX1 and the voltage measured by the voltage measurement unit ADY1 are Vcc/2, the CPU 31 determines that the contact point is one point. On the other hand, when both the voltage measured by the voltage measurement unit ADX1 and the voltage measured by the voltage measurement unit ADY1 are less than Vcc/2, the CPU 31 determines that the contact point is two points.

If it is determined in S3 that the contact point is one point, the CPU 31 detects the coordinates of the contact point by a normal position detection method (S4). The CPU 31 turns on the switches SW1 and SW3, turns off the other switches, and detects the X coordinate of the contact point based on the voltage measured by the voltage measurement unit ADY1 or ADY2. At this time, the CPU 31 calculates the distance from the XH electrode 12 to the contact point in the X-axis direction by multiplying the ratio of the voltage measured by the voltage measurement unit ADY1 or ADY2 to the potential difference between the XH electrode 12 and the XL electrode 14 by the distance between the XH electrode 12 and the XL electrode 14. Further, the CPU 31 turns on the switches SW4 and SW6, turns off the other switches, and detects the Y coordinate of the contact point based on the voltage measured by the voltage measurement unit ADX1 or ADX2. Here, the CPU 31 calculates the distance from the YH electrode 22 to the contact point in the Y-axis direction by multiplying the distance between the YH electrode 22 and the YL electrode 24 by the ratio of the voltage measured by the voltage measurement unit ADX1 or ADX2 to the potential difference between the YH electrode 22 and the YL electrode 24.

Next, the CPU 31 turns on the switches SW1, SW6, and SW8, and turns off the other switches, and the voltage measurement unit ADY1 measures a voltage. Subsequently, the CPU 31 turns on the switches SW1, SW8, and SW12, and turns off the other switches, and the voltage measurement unit ADY2 measures a voltage. The CPU 31 stores the total value of the voltage measured by the voltage measurement unit ADY1 and the voltage measured by the voltage measurement unit ADY2 in the memory 33 (S5). Since the total value stored in the memory 33 is correlated with the contact area between the resistive films 10 and 20, the relative magnitude relationship of the contact area can be obtained using the total value.

In the above description, the total value of the voltage measured by the voltage measurement unit ADY1 and the voltage measured by the voltage measurement unit ADY2 is set as the contact area of the contact point, but the total value of the voltage measured by the voltage measurement unit ADX1 and the voltage measured by the voltage measurement unit ADX2 may be set as the contact area of the contact point. In this case, the CPU 31 turns on the switches SW3, SW4 and SW10, and turns off the other switches, and the voltage measurement unit ADX1 measures a voltage. Subsequently, the CPU 31 turns on the switches SW4, SW10 and SW11, and turns off the other switches, and the voltage measurement unit ADX2 measures a voltage.

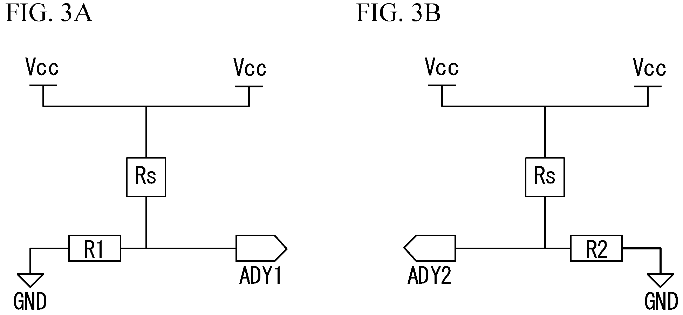

FIG. 3A is a diagram illustrating an equivalent circuit in a case where the voltage measurement unit ADY1 measures a voltage in S5. FIG. 3B is a diagram illustrating an equivalent circuit in a case where the voltage measurement unit ADY2 measures a voltage in S5. In FIGs. 3A and 3B, "Rs" represents a resistance between the resistive films 10 and 20 at the contact point, "R1" represents a resistance from the contact point to the YL electrode 24, and "R2" represents a resistance from the contact point to the YH electrode 22. The resistance Rs depends on the contact area of the resistive film 10 and the resistive film 20, the resistance R1 depends on a distance between the contact point and the YL electrode 24, and the resistance R2 depends on a distance between the contact point and the YH electrode 22.

When the input position is the same, the resistance R1 is constant, and the measured voltage of the voltage measurement unit ADY1 is proportional to the contact area of the contact point, so that the contact area can be estimated. However, when the input position changes, the value of the resistor R1 also changes. Therefore, the electrodes to be grounded are replaced by the YH electrode 22 and the YL electrode 24, and the voltages are measured by the respective voltage measurement units, and the voltages measured by the voltage measurement unit ADY1 and the voltages measured by the voltage measurement unit ADY2 are summed up. By using the sum as the contact area, the variation of the calculation result of the contact area due to the difference in the input position is suppressed, and the contact area can be detected independently of the input position.

The measured voltages of the voltage measurement units ADY1 and ADY2 are calculated by the following equation. $ADY 1 = Vcc \times R 1 / \left(Rs+R1\right)$ $ADY 2 = Vcc \times R 2 / \left(Rs+R2\right)$

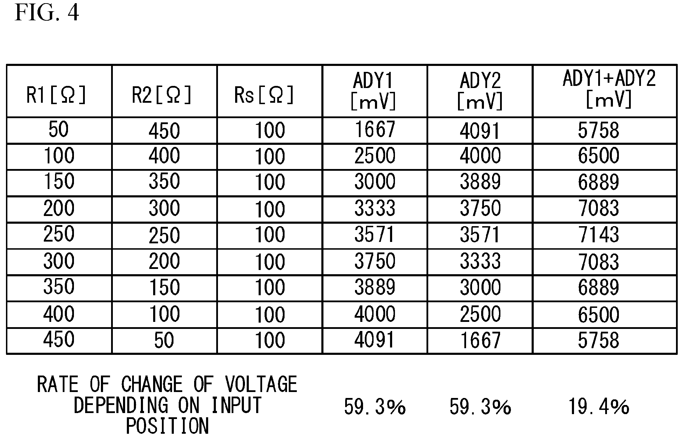

For example, FIG. 4 illustrates an example of voltages measured by the voltage measurement units ADY1 and ADY2 when the resistance Rs corresponding to the contact area is fixed to 100 Ω and the resistances R1 and R2 are changed.

The maximum value of the voltage values measured by the voltage measurement units ADY1 and ADY2 is 4091 mV, and the minimum value thereof is 1667 mV. Therefore, the rate of change of the voltage measured by either the voltage measurement unit ADY1 or ADY2 depending on the input position is 59.3% (= (4091 - 1667) / 4091 × 100%). Accordingly, when the voltage is measured by only one of the voltage measurement units ADY1 and ADY2, it is understood that the measured voltage value, that is, the variation in the contact area due to the difference in the input position is large.

On the other hand, the maximum value of the total of the voltage values measured by the voltage measurement units ADY1 and ADY2 is 7143 mV, and the minimum value thereof is 5758 mV. Therefore, when the voltages are measured by both the voltage measurement units ADY1 and ADY2, the rate of change of the voltages depending on the input position is 19.4% (= (7143 - 5758) / 7143 × 100%). Accordingly, it is understood that the variation of the contact area due to the difference in the input position can be suppressed by using the total value of the voltage values measured by both the voltage measurement units ADY1 and ADY2.

Referring back to FIG. 2, the CPU 31 generates touch data by associating the coordinates of the contact point detected in S4 with the contact area measured in S5, and outputs the touch data to the computer 40 via the input/output unit 36 (S6), and then ends the present process.

On the other hand, if it is determined in S3 that the contact point is two points, the CPU 31 determines whether the inclination of the line segment connecting the two points is parallel to the X-axis direction or the Y-axis direction, or is in an oblique direction (S7).

Prior to the processing of FIG. 2, as an initial processing, the switches SW2 and SW3 are turned on in a state where the contact point is 0 or 1 point, and the other switches are turned off, and the voltage is measured in advance by the voltage measurement unit ADX1 in a state where the potential distribution is formed in the X-axis direction of the resistive film 10. The CPU 31 stores the voltage measured by the voltage measurement unit ADX1 in this state as an initial voltage α1 in the memory 33. Similarly, the switches SW5 and SW6 are turned on in a state where the contact point is 0 or 1 point, and the other switches are turned off, thereby forming the potential distribution in the Y-axis direction of the resistive film 20, and the voltage is measured in advance by the voltage measurement unit ADY1. The CPU 31 stores the voltage measured by the voltage measurement unit ADY1 in this state as an initial voltage α2 in the memory 33. Such setting of the initial voltage can be performed at an appropriate timing, for example, when the apparatus is started to be used, when the apparatus is manufactured, or the like.

In S7, the CPU 31 compares the voltages measured in S1 and S2 with the stored initial voltages α1 and α2, and thereby determines whether the line segment connecting the two points is parallel to the X-axis direction, parallel to the Y-axis direction, or oblique to the X-axis direction and the Y-axis direction.

When the voltage measured in S1 is lower than the initial voltage α1 and the voltage measured in S2 is substantially equal to the initial voltage α2, the CPU 31 determines that the line segment connecting the two points is parallel to the X-axis direction. If the voltage measured in S1 is substantially the same as the initial voltage α1 and the voltage measured in S2 is lower than the initial voltage α2, the CPU 31 determines that the line segment connecting the two points is parallel to the Y-axis direction. Furthermore, when the voltage measured in S1 is lower than the initial voltage α1 and the voltage measured in S2 is lower than the initial voltage α2, the CPU 31 determines that the line segment connecting the two points is in the oblique direction.

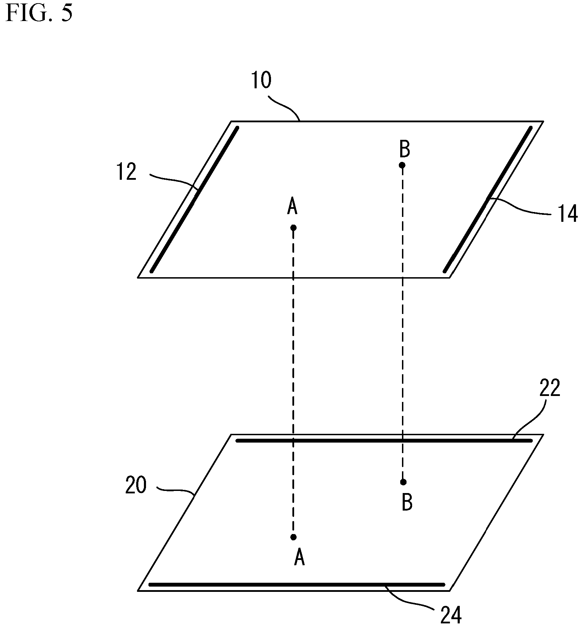

In order to determine whether the inclination of the line segment connecting the two points of a point A and a point B is in a rightward-ascending direction or a rightward-descending direction as illustrated in FIG. 5, the CPU 31 turns on the switches SW1 and SW3 and turns off the other switches to form the potential distribution in the X-axis direction of the resistive film 10, and the voltage measurement units ADY1 and ADY2 measure the voltage. When the voltage measured by the voltage measurement unit ADY1 is lower than the voltage measured by the voltage measurement unit ADY2, the CPU 31 determines that the inclination of the line segment connecting the two points is the rightward-ascending-direction. When the voltage measured by the voltage measurement unit ADY1 is higher than the voltage measured by the voltage measurement unit ADY2, the CPU 31 determines that the inclination of the line segment connecting the two points is a leftward-ascending-direction.

Next, the CPU 31 calculates the coordinates of the midpoint of the two points (S8). Specifically, the CPU 31 turns on the switches SW1 and SW3 and turns off the other switches to form the potential distribution in the X-axis direction of the resistive film 10, and the voltage measurement units ADY1 and ADY2 measure the voltage. The CPU 31 acquires the voltage in the X-axis direction by calculating an average value of the voltages measured by the voltage measurement unit ADY1 and the voltage measured by the voltage measurement unit ADY2, and acquires the X coordinate of the midpoint based on the acquired voltage. For example, the CPU 31 acquires the distance from the XH electrode 12 in the X-axis direction by multiplying the distance between the XH electrode 12 and the XL electrode 14 by the ratio of the potential difference between the XH electrode 12 and the XL electrode 14 to the calculated average value.

Similarly, the CPU 31 turns on the switches SW4 and SW6 and turns off the other switches to form the potential distribution in the Y-axis direction of the resistive film 20, and the voltage measurement units ADX1 and ADX2 measure the voltage. The CPU 31 acquires the Y coordinate of the midpoint based on the average value of the voltage measured by the voltage measurement unit ADX1 and the voltage measured by the voltage measurement unit ADX2. For example, the CPU 31 multiplies the distance between the YH electrode 22 and the YL electrode 24 by the ratio of the potential difference between the YH electrode 22 and the YL electrode 24 to the calculated average value, thereby acquiring the distance from the YH electrode 22 in the Y-axis direction.

Referring back to FIG. 2, the CPU 31 calculates the distance between two points (S9). Specifically, the distance between two points is calculated based on the voltages measured in S1 and S2.

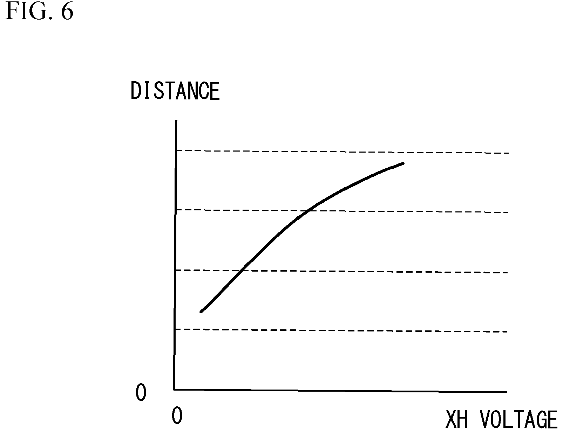

FIG. 6 illustrates a relationship between the distance between two points in the X-axis direction and the voltage measured by the voltage measurement unit ADX1, and the relationship of FIG. 6 is used as distance calculation data. The distance calculation data is stored in the memory 33.

As illustrated in FIG. 6, the value of the measured voltage increases as the distance between two points increases.

The distance between two points in the X-axis direction is obtained based on the relationship between the distance between two points illustrated in FIG. 6 and the voltage measured by the voltage measurement unit ADX1.

The memory 33 also includes the distance calculation data indicating the relationship between the distance between two points in the Y-axis direction and the voltage measured by the voltage measurement unit ADY1. The CPU 31 obtains the distance between two points in the Y-axis direction based on the distance calculation data indicating the relationship between the distance between two points in the Y-axis direction and the voltage measured by the voltage measurement unit ADY1 and the voltage measured by the voltage measurement unit ADY1, in a manner similar to the method for obtaining the distance between two points in the X-axis direction.

Referring back to FIG. 2, the CPU 31 executes a process of correcting the distance between two points calculated in S9 (S10). The details of the process of correcting the distance between two points in S10 will be described later. The distance between two points after S10 is a distance between two points corrected in S10.

Next, the CPU 31 calculates the coordinates of the two points (S11). The CPU 31 calculates the coordinates of each of the two points based on the position of the midpoint of the two points and the distance between two points.

Specifically, when the distance between two points in the X-axis direction is calculated as Lx, the distance between two points in the Y-axis direction is calculated as Ly, and the midpoint coordinates of the two points are (Xc, Yc), the coordinates of the two points are expressed by any of the following equations (1) to (4). Note that Equation (1) indicates a case where the two points are on a rightward-ascending straight line, Equation (2) indicates a case where the two points are on a leftward-ascending straight line, Equation (3) indicates a case where the two points are on a straight line in the X-axis direction, and Equation (4) indicates a case where the two points are on a straight line in the Y-axis direction. $\left(Xc+Lx/2, Yc+Ly/2\right) , \left(Xc-Lx/2, Yc-Ly/2\right)$ $\left(Xc+Lx/2, Yc-Ly/2\right) , \left(Xc-Lx/2, Yc+Ly/2\right)$ $\left(Xc+Lx/2, Yc\right) , \left(Xc-Lx/2, Yc\right)$ $\left(Xc, Yc+Ly/2\right) , \left(Xc, Yc-Ly/2\right)$

Next, the CPU 31 calculates the contact area at each contact point (S12). A process of calculating the contact area will be described in detail later.

Next, the CPU 31 generates touch data in which the coordinates of the two points calculated in step S11 and the contact area at each contact point calculated in step S12 are associated with each other, and outputs the touch data to the computer 40 via the input/output unit 36 (S13), and ends the process of FIG. 2.

By this processing, the computer 40 that received the touch data can determine a magnitude relationship between the contact areas of the two contact points.

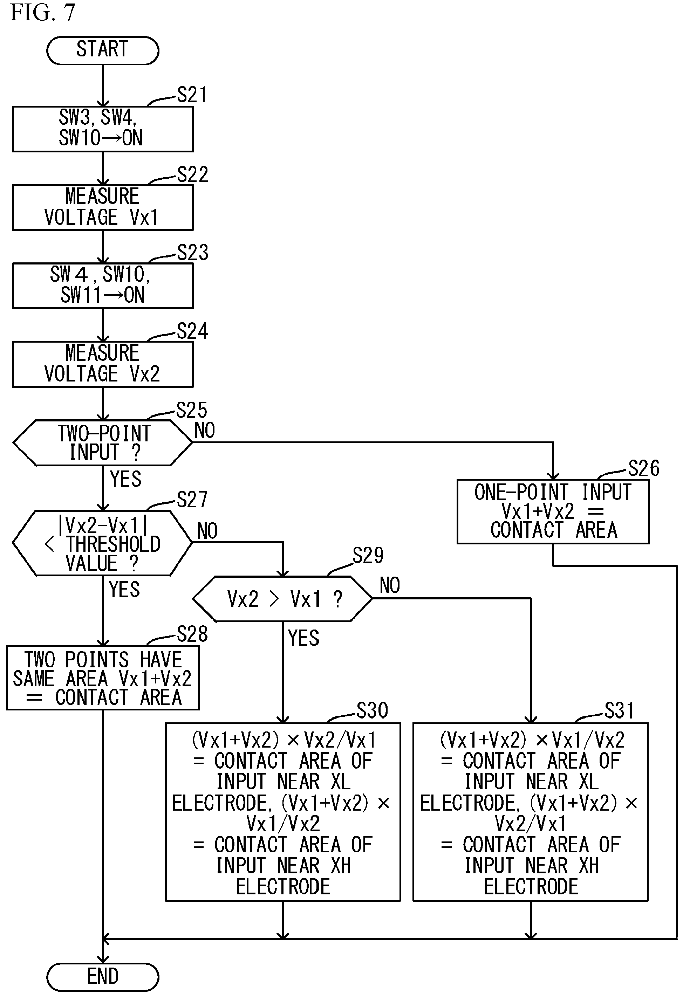

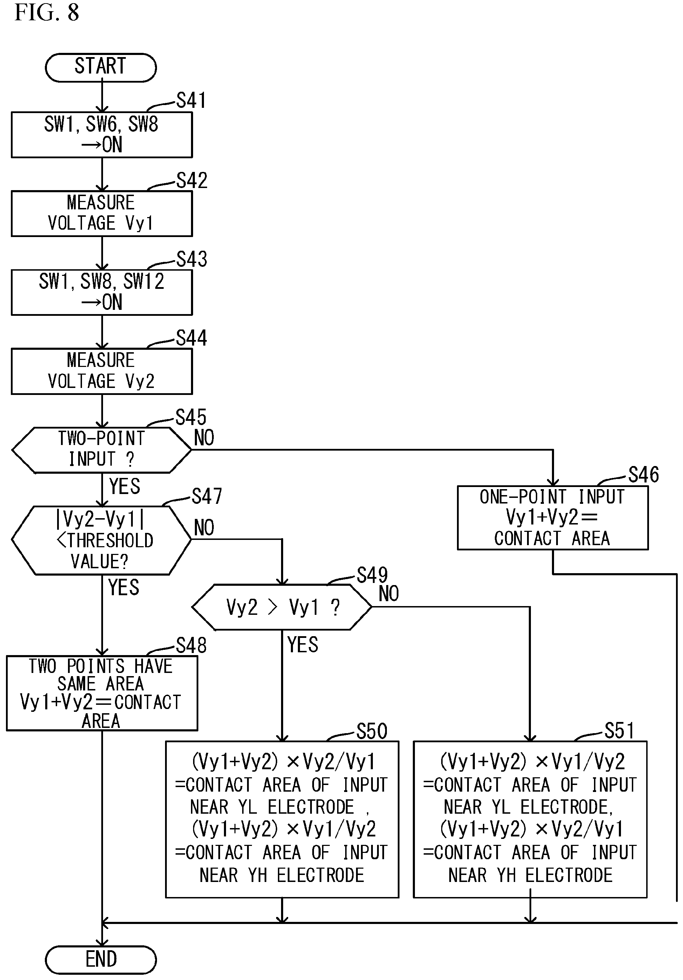

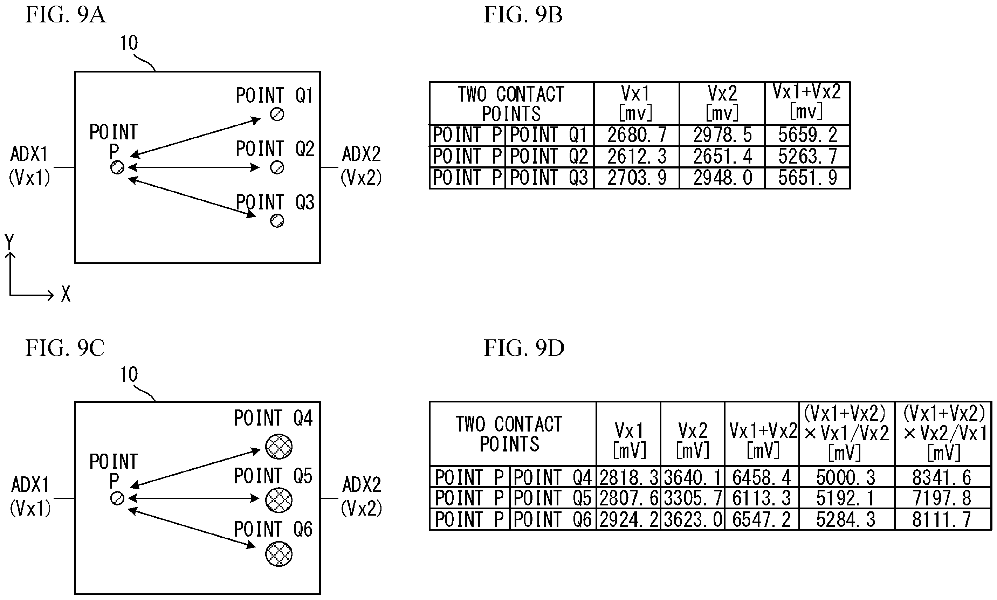

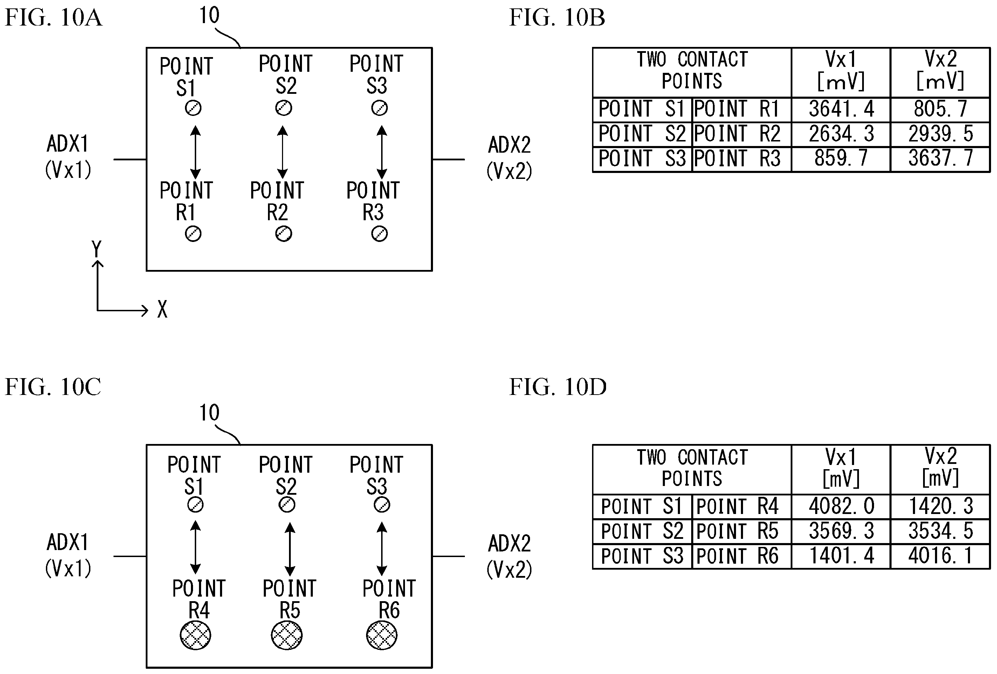

FIGs. 7 and 8 are flowcharts illustrating the process of calculating the contact area at each contact point. FIG. 9A is a diagram illustrating press patterns of the two points. FIG. 9B is a diagram illustrating voltage values measured by the voltage measurement units ADX1 and ADX2 in the state of FIG. 9A. FIG. 9C is a diagram illustrating press patterns of the two points. FIG. 9D is a diagram illustrating voltage values measured by the voltage measurement units ADX1 and ADX2 in the state of FIG. 9C. FIG. 10A is a diagram illustrating press patterns of the two points. FIG. 10B is a diagram illustrating voltage values measured by the voltage measurement units ADX1 and ADX2 in the state of FIG. 10A. FIG. 10C is a diagram illustrating press patterns of the two points. FIG. 10D is a diagram illustrating voltage values measured by the voltage measurement units ADX1 and ADX2 in the state of FIG. 10C.

FIG. 7 illustrates a process executed by the CPU 31 when the line segment connecting the two points is parallel or oblique to the X-axis direction, and FIG. 8 illustrates a process executed by the CPU 31 when the line segment connecting the two points is parallel or oblique to the Y-axis direction.

In S7 of FIG. 2, it is determined whether the line segment connecting the two points is parallel to the X-axis direction, parallel to the Y-axis direction, or oblique to the X-axis direction and the Y-axis direction, and since the input coordinates of the two points are known in the process of S11 of FIG. 2, the CPU 31 can determine the state of the line segment connecting the two points before the process of calculating the contact area. Accordingly, the CPU 31 selects either the process of FIG. 7 or the process of FIG. 8 to execute based on the process result of S7 or S11 of FIG. 2.

Hereinafter, the voltage measured by the voltage measurement unit ADX1 is referred to as a voltage Vx1, and the voltage measured by the voltage measurement unit ADX2 is referred to as a voltage Vx2.

In FIG. 7, the CPU 31 turns on the switches SW3, SW4, and SW10, and turns off the other switches (S21), and the voltage measurement unit ADX1 measures the voltage Vx1 (S22). Since the switches SW4 and SW10 are turned on, the power supply voltage Vcc is applied uniformly to the entire resistive film 20. In this way, when calculating the contact area, the potential applied to the entire resistance film on a voltage application side is made uniform. This is because, when the potential distribution is formed in the resistance film on the voltage application side, the voltage measured by the voltage measuring section varies depending on the position of the two-point input, and the contact area cannot be appropriately detected.

Subsequently, the CPU 31 turns on the switches SW4, SW10, and SW11, and turns off the other switches (S23), and the voltage measurement unit ADX2 measures the voltage Vx2 (S24). Since the switches SW4 and SW10 are also turned ON in this case, the power supply voltage Vcc is applied uniformly to the entire resistive film 20.

The CPU 31 determines whether the contact point is two points (S25), as in S3 of FIG. 2. If the contact point is one point (NO in S25), the CPU 31 stores the total value of the voltages Vx1 and Vx2 in the memory 33 as the contact area of the contact point (S26), and ends the process.

If the contact point is two points (YES in S25), it is determined whether the difference between the voltage Vx2 and the voltage Vx1 is less than a threshold value (for example, 300 mV) (S27). In S27, it is determined whether the contact areas of the two points are substantially the same as each other.

For example, in FIG. 9A, both a point P and points Q1 to Q3 indicate contact points with the pen tip. In this case, it is expected that the contact area at the time of pressing the point P and the contact area at the time of pressing the points Q1 to Q3 are the same or substantially the same as each other. As two-point press patterns, three patterns, i.e., a press pattern of the points P and Q1, a press pattern of the points P and Q2, and a press pattern of the points P and Q3 are illustrated. In all cases, as illustrated in FIG. 9B, the difference between voltages Vx2 and Vx1 is, for example, less than 300 mV.

On the other hand, in FIG. 9C, the point P indicates the contact point with the pen tip, and points Q4 to Q6 indicate contact points with the fingertips. The contact area between the points Q4 to Q6 is larger than the contact area of the point P. As two-point press patterns, three patterns, i.e., a press pattern of the points P and Q4, a press pattern of the points P and Q5, and a press pattern of the points P and Q6 are illustrated. In all cases, as illustrated in FIG. 9D, the difference between voltages Vx2 and Vx1 is, for example, 300 mV or more.

Referring back to FIG. 7, when the differential between the voltages Vx2 and Vx1 is less than the threshold (YES in S27), the CPU 31 stores the total value of the voltages Vx2 and Vx1 in the memory 33 as the contact area of each point of the two-point input (S28), and ends the process. For example, a total value of 5659.2 mV illustrated in FIG. 9B is assigned to the points P and Q1 in FIG. 9A as the voltage corresponding to the contact area.

When the difference between the voltage Vx2 and the voltage Vx1 is equal to or greater than the threshold value (NO in S27), the CPU 31 determines whether the voltage Vx2 is greater than the voltage Vx1 (S29). Here, it is determined which of the two input points has a larger contact area.

If the voltage Vx2 is greater than the voltage Vx1 (YES in S29), the CPU 31 sets a value (= (Vx1 + Vx2) ×Vx2 / Vx1), which is obtained by multiplying the ratio of the voltage Vx2 to the voltage Vx1 by the total value of the voltage Vx1 and the voltage Vx2, as the contact area of the input point near the XL electrode 14, and sets a value (= (Vx1 + Vx2) ×Vx1 / Vx2), which is obtained by multiplying the ratio of the voltage Vx1 to the voltage Vx2 by the total value of the voltage Vx1 and the voltage Vx2, as the contact area of the input point near the XH electrode 12 (S30), and then ends the process. For example, 5000.3 mV and 8341.6 mV illustrated in FIG. 9D are respectively assigned to the points P and Q4 illustrated in FIG. 9C as voltages corresponding to the contact areas.

If the voltage Vx1 is greater than the voltage Vx2 (NO in step S29), the CPU 31 sets a value (= (Vx1 + Vx2) ×Vx1 / Vx2), which is obtained by multiplying the ratio of the voltage Vx1 to the voltage Vx2 by the total value of the voltage Vx1 and the voltage Vx2 as the contact area of the input point near the XH electrode 12, and sets a value (= (Vx1 + Vx2) ×Vx2 / Vx1), which is obtained by multiplying the ratio of the voltage Vx2 to the voltage Vx1 by the total value of the voltage Vx1 and the voltage Vx2 as the contact area of the input point near the XL electrode 14 (S31), and then ends the process.

As described above, in the process of calculating the contact area, in both the case of the one-point input and the case of the two-point input, as illustrated in S26, S28, S30, and S31, the total value of the voltage Vx1 measured by the voltage measurement unit ADX1 and the voltage Vx2 measured by the voltage measurement unit ADX2 is used, whereby the variation of the contact area due to the difference in the input position is suppressed, and the contact area independent of the input position is detected.

As illustrated in FIGs. 9B and 9D, when the voltages Vx1 and Vx2 are measured, even if the total value of the voltages Vx1 and Vx2 is used, the total value varies depending on the input position. In order to suppress the variation, for example, the CPU 31 may correct the values of the voltages Vx1 and Vx2 by using a correction coefficient predetermined in accordance with the input position, thereby suppressing the variation in the total value of the voltages Vx1 and Vx2 due to the difference in the input position.

In FIG. 10A, the points S1 to S3 and the points R1 to R3 are all contact points with the pen tip. The contact areas of the points S1 to S3 and the points R1 to R3 are the same as each other. As two-point press patterns, three patterns, i.e., a press pattern of the points S1 and R1, a press pattern of the points S2 and R2, and a press pattern of the points S3 and R3 are illustrated. As illustrated in FIG. 10B, the values of the voltages Vx1 and Vx2 vary greatly depending on the input position in the range of 3641.4 mV to 805.7 mV.

In FIG. 10C, the points S1 to S3 indicate contact points with the pen tip, and the points R4 to R6 indicate contact points with the fingertip. The contact area when each of the points R4 to R6 is pressed is larger than the contact area when each of the points S1 to S3 is pressed. As two-point press patterns, three patterns, i.e., a press pattern of the points S1 and R4, a press pattern of the points S2 and R5, and a press pattern of the points S3 and R6 are illustrated. In this case, as illustrated in FIG. 10D, the values of the voltages Vx1 and Vx2 vary greatly depending on the input position in the range of 4082.0 mV to 1401.4 mV.

The process of calculating the contact area illustrated in FIG. 7 cannot be used when the line segment connecting the two points is parallel to the Y-axis direction as illustrated in FIGs. 10A and 10C. The reason why the process of calculating the contact area cannot be used is that the values of the voltages Vx1 and Vx2 greatly vary depending on the position of the input, and the contact area to be obtained also greatly varies, as illustrated in FIGs. 10B and 10D. Therefore, as described above, when the line segment connecting the two points is parallel to the Y-axis direction as illustrated in FIGs. 10A and 10C, the process of calculating the contact area of FIG. 8 is used.

The process of calculating the contact area illustrated in FIG. 8 will be described below. The voltage measured by the voltage measurement unit ADY1 is referred to as a voltage Vy1, and the voltage measured by the voltage measurement unit ADY2 is referred to as a voltage Vy2.

In FIG. 8, the CPU 31 turns on the switches SW1, SW6, and SW8, and turns off the other switches (S41), and the voltage measurement unit ADY1 measures the voltage Vy1 (S42). Since the switches SW1 and SW8 are turned on, the power supply voltage Vcc is applied uniformly to the entire resistive film 10.

Subsequently, the CPU 31 turns on the switches SW1, SW8, and SW12, and turns off the other switches (S43), and the voltage measurement unit ADY2 measures the voltage Vy2 (S44). Since the switches SW1 and SW8 are also turned ON in this case, the power supply voltage Vcc is uniformly applied to the entire resistive film 10.

The CPU 31 determines whether the contact point is two points (S45), as in S3 of FIG. 2. If the contact point is one point (NO in S45), the CPU 31 stores the total value of the voltages Vy1 and Vy2 in the memory 33 as the contact area of the contact point (S46), and ends the process.

If the contact point is two points (YES in S45), it is determined whether the difference between the voltage Vy2 and the voltage Vy1 is less than a threshold value (for example, 300 mV) (S47). Here, it is determined whether the contact areas of the two points are substantially the same as each other.

If the difference between the voltage Vy2 and the voltage Vy1 is less than the threshold value (YES in S47), the CPU 31 stores the total value of the voltage Vy2 and the voltage Vy1 in the memory 33 as the contact area of each of the two input points (S48), and ends the process.

When the difference between the voltage Vy2 and the voltage Vy1 is equal to or greater than the threshold value (NO in S47), the CPU 31 determines whether the voltage Vy2 is greater than the voltage Vy1 (S49). In this case, it is determined which of the two input points has a larger contact area.

If the voltage Vy2 is greater than the voltage Vy1 (YES in S49), the CPU 31 sets a value (= (Vy1 + Vy2) ×Vy2 / Vy1), which is obtained by multiplying the ratio of the voltage Vy2 to the voltage Vy1 by the total value of the voltage Vy1 and the voltage Vy2, as the contact area of the input point near the YL electrode 24, and sets a value (= (Vy1 + Vy2) ×Vy1 / Vy2), which is obtained by multiplying the ratio of the voltage Vy1 to the voltage Vy2 by the total value of the voltage Vy1 and the voltage Vy2, as the contact area of the input point near the YH electrode 22 (S50), and then ends the process.

If the voltage Vy1 is greater than the voltage Vy2 (NO in S49), the CPU 31 sets a value (= (Vy1 + Vy2) ×Vy1 / Vy2), which is obtained by multiplying the ratio of the voltage Vy1 to the voltage Vy2 by the total value of the voltage Vy1 and the voltage Vy2, as the contact area of the input point near the YH electrode 22, and sets a value (= (Vy1 + Vy2) ×Vy2 / Vy1), which is obtained by multiplying the ratio of the voltage Vy2 to the voltage Vy1 by the total value of the voltage Vy1 and the voltage Vy2, as the contact area of the input point near the YL electrodes 24 (S51), and then ends the process.

The contact area calculated in the processing of FIGs. 7 and 8 can be applied to an application in which the operation is changed depending on the size of the contact area at each input point. For example, the contact area calculated in the processing of FIGs. 7 and 8 can be applied to (1) an application displaying a button for determining that an input with a pen tip having a smaller contact area than a fingertip at the time of press is valid or a button for determining that an input with a fingertip is valid, (2) an application changing a contact area on which a button reacts to in real time, (3) an application changing a gesture function according to a contact area at the time of press, and the like.

The process of correcting the distance between two points in S10 of FIG. 2 will be described below.

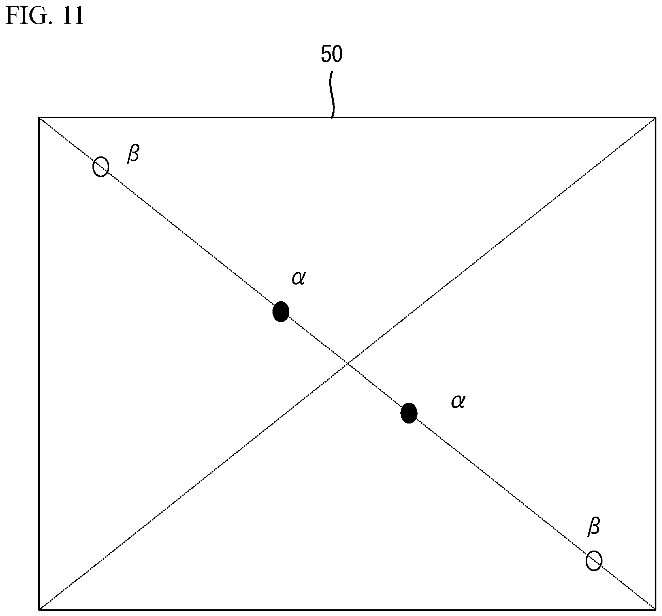

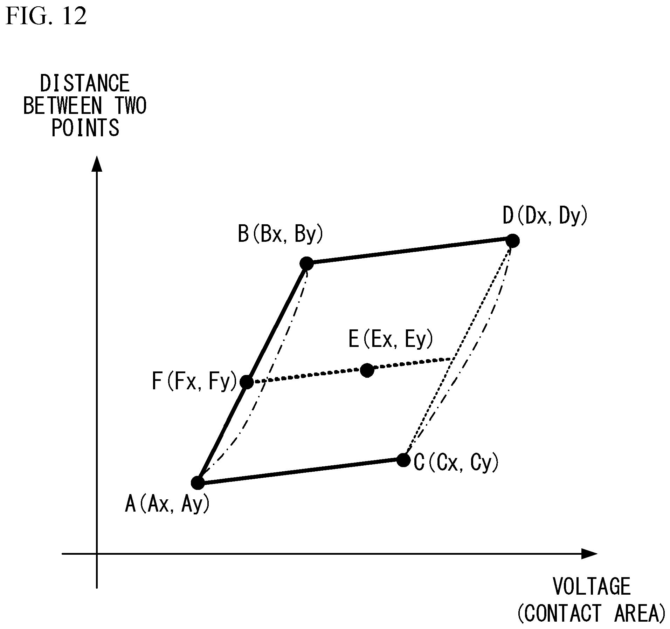

FIG. 11 is a diagram illustrating an example in which a plurality of two-point inputs are displayed on a display device disposed under the touch panel 50. FIG. 12 is a diagram illustrating the relationship between the contact area and the distance between two points when the input points of the two-point input of FIG. 11 are pressed. Although the X axis and the Y axis in FIG. 12 indicate the contact area and the distance between two points, respectively, the Y axis and the X axis in FIG. 12 may indicate the contact area and the distance between two points, respectively.

In FIG. 11, two points α and two points β are displayed as input points of the two-point input on the display device disposed under the touch panel 50. The two points α and the two points β are displayed in sequence to prompt a user to perform a touch input. The two points α and the two points β are arranged in the same direction (i.e., an upper left direction in FIG. 11), and a distance between two points β is larger than a distance between two points α. It is sufficient that the two points α and the two points β are arranged in the same direction, and the two points α and the two points β may be arranged in an upper right direction, a horizontal direction, or a vertical direction in FIG. 11.

The contact area and the distance between two points when the two points α in FIG. 11 are input by a pen (first input unit) having a tip of 2 mm in diameter φ correspond to a point A in FIG. 12, and the contact area and the distance between two points when the two points β in FIG. 11 are input by the pen having the tip of 2 mm in diameter φ correspond to a point B in FIG. 12. The contact area and the distance between two points when the two points α of FIG. 11 are input by a jig (second input unit) having a tip of 22 mm in diameter φ correspond to a point C of FIG. 12, and the contact area and the distance between two points when the two points β of FIG. 11 are input by the jig having the tip of 22 mm in diameter φ correspond to a point D of FIG. 12. The diameter of each of the first and the second input units is an example, and is not limited to the above-mentioned value.

When two points are input by a finger (third input unit), for example, since the finger has a tip of a diameter of 6 to 15 mm, the contact area of the jig having the tip of 22 mm in diameter is larger than the contact area of the finger, and the contact area of the finger is larger than the contact area of the pen having the tip of 2 mm in diameter. A member having a contact area smaller than the contact area of the finger is not limited to the pen. A member having a contact area larger than the contact area of the finger is not limited to the jig. The third input unit having a diameter larger than that of the pen having the tip of 2 mm and smaller than that of the jig having the tip of 22 mm is not limited to the finger, and may be, for example, a jig having a tip of 10 mm in diameter φ.

In FIG. 12, the distance between two points is calculated in the same manner as in S9 of FIG. 2. The contact areas of each point of the two-point input at the respective points are set to the total value of the voltages Vx2 and Vx1, and the total value of the contact areas of the two points is set to double the total value of the voltages Vx2 and Vx1, as in S28 of FIG. 7.

When two arbitrary points are input while the distance between two points β in FIG. 11 is made closer to the distance between two points α, and the contact area and the distance between two points are plotted in FIG. 12, the curves between the points A and B and between the points C and D in FIG. 12 are actually as illustrated by the alternate long and short dash lines. However, in the present embodiment, by approximating the curve between the points A and B in FIG. 12 by a straight line, the calculation of a correction equation and a correction method, which will be described later, can be facilitated, and the processing load of the CPU 31 can be reduced.

A point E in FIG. 12 indicates the contact area and the distance between two points when two points are input by the finger. As illustrated in FIG. 12, even if the same two points (for example, two points α and two points β) are input, when the contact area of the two points is large, the distance between two points becomes larger than the actual distance, and the input coordinates of the two points are deviated from the actual coordinates of the two points. Therefore, in the present embodiment, the CPU 31 generates a straight line EF that passes through the point E in FIG. 12 and is parallel to a straight line AC or a straight line BD as a correction formula, and corrects a distance between two points (i.e., the distance between two points of the point E) when two points are input by the finger to a distance between two points of an intersection point F between the correction formula and the straight line AB. This correction can suppress the distance between two points when two points are input by the finger from becoming greater than the actual distance. That is, the deviation of the distance between two points due to the contact area can be suppressed. Further, since the coordinates of the two points are calculated using the distance between two points as illustrated in S11 of FIG. 2, the accuracy of the coordinates (input positions) of the two points can be improved.

Assume that the coordinates of the point A in FIG. 12 are (Ax, Ay), the coordinates of the point B are (Bx, By), the coordinates of the point C are (Cx, Cy), the coordinates of the point D are (Dx, Dy), the coordinates of the point E are (Ex, Ey), and the coordinates of the point F are (Fx, Fy).

At this time, the straight line AC is calculated by an equation (5), the straight line AB is calculated by an equation (6), the straight line FE is calculated by an equation (7), and the intersection point F is calculated by an equation (8).$STRAIGHT LINE AC Y = \frac{\left(Cy-Ay\right) X + Ay \left(Cx-Ax\right) - Ax \left(Cy-Ay\right)}{Cx - Ax}$$STRAIGHT LINE AB Y = \frac{\left(By-Ay\right) X + Ay \left(Bx-Ax\right) - Ax \left(By-Ay\right)}{Bx - Ax}$$STRAIGHT LINE FE Y = \frac{\left(Cy-Ay\right) X + \left(Cx-Ax\right) Ey - \left(Cy-Ay\right) Ex}{Cx - Ax}$$\begin{matrix}INTERSECTION POINT F \\ Fx = \frac{\left(Bx-Ax\right) \left(Cx-Ax\right) Ey - \left(Bx-Ax\right) \left(Cy-Ay\right) Ex - Ay \left(Bx-Ax\right) \left(Cx-Ax\right) + Ax \left(Cx-Ax\right) \left(By-Ay\right)}{\left(Cx-Ax\right) \left(By-Ay\right) - \left(Bx-Ax\right) \left(Cy-Ay\right)} \\ Fy = \frac{\left(By-Ay\right) \left\{\left(Bx-Ax\right)\left(Cx-Ax\right)Ey-\left(Bx-Ax\right)\left(Cy-Ay\right)Ex-Ay\left(Bx-Ax\right)\left(Cx-Ax\right)+Ax\left(Cx-Ax\right)\left(By-Ay\right)\right\}}{\left(Bx-Ax\right) \left\{\left(Cx-Ax\right)\left(By-Ay\right)-\left(Bx-Ax\right)\left(Cy-Ay\right)\right\}} \\ + Ay - \frac{\left(By-Ay\right) Ax}{Bx - Ax}\end{matrix}$

The straight line BD may be used instead of the straight line AC. In this case, the straight line BD is calculated by an equation (9), the straight line AB is calculated by the equation (6), the straight line FE is calculated by an equation (10), and the intersection point F is calculated by an equation (11).$STRAIGHT LINE BD Y = \frac{\left(Dy-By\right) X + By \left(Dx-Bx\right) - Bx \left(Dy-By\right)}{Dx - Bx}$ $STRAIGHT LINE FE Y = \frac{\left(Dy-By\right) X + \left(Dx-Bx\right) Ey - \left(Dy-By\right) Ex}{Dx - Bx}$$\begin{matrix}INTERSECTION POINT F \\ Fx = \frac{\left(Bx-Ax\right) \left(Dx-Bx\right) Ey - \left(Bx-Ax\right) \left(Dy-By\right) Ex - Ay \left(Bx-Ax\right) \left(Dx-Bx\right) + Ax \left(Dx-Bx\right) \left(By-Ay\right)}{\left(Dx-Bx\right) \left(By-Ay\right) - \left(Bx-Ax\right) \left(Dy-By\right)} \\ Fy = \frac{\left(Dy-Ay\right) \left\{\left(Bx-Ax\right)\left(Dx-Bx\right)Ey-\left(Bx-Ax\right)\left(Dy-By\right)Ex-Ay\left(Bx-Ax\right)\left(Dx-Bx\right)+Ax\left(Dx-Bx\right)\left(By-Ay\right)\right\}}{\left(Bx-Ax\right) \left\{\left(Dx-Bx\right)\left(By-Ay\right)-\left(Bx-Ax\right)\left(Dy-By\right)\right\}} \\ + Ay - \frac{\left(By-Ay\right) Ax}{Bx - Ax}\end{matrix}$

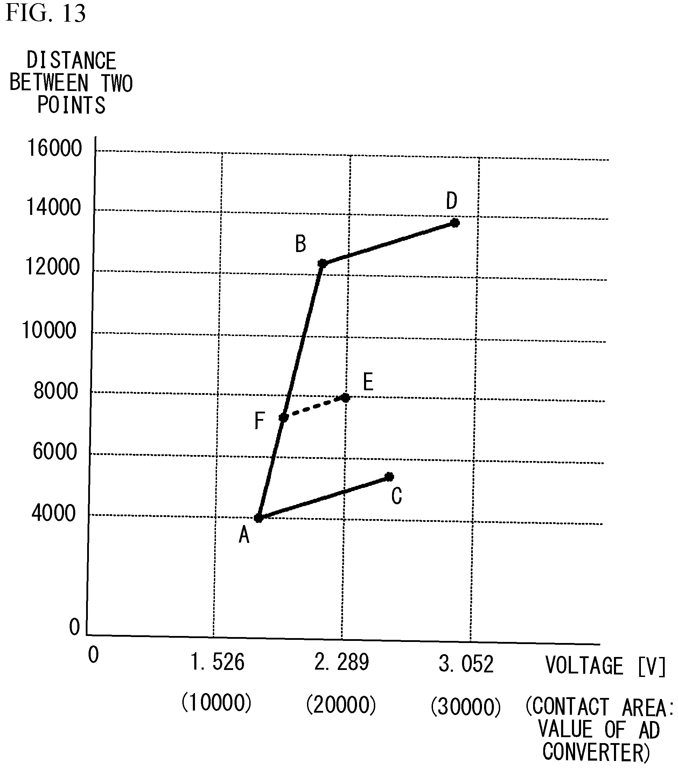

An example of actual simulation is illustrated in FIG. 13. FIG. 13 is a diagram illustrating a relationship between the contact area and the distance between two points when the input points of the two-point input of FIG. 11 are pressed.

In the simulation, the upper left corner of the touch panel 50 is set as an origin (0, 0), and the lower right corner is set as maximum coordinates (16383, 16383). The power supply voltage Vcc is set to 5 V, and a 14-bit AD converter is employed as the voltage measurement units ADX1, ADX2, ADY1, and ADY2. Since the contact area of each point is the total value of the voltages Vx2 and Vx1, the possible range of the contact area of each point is 0 to 32766 (twice as large as 3 fffh = 16383). Since the total value of the contact areas of the two points is twice the total value of the voltages Vx2 and Vx1, the possible range of the total value of the contact areas of the two points is 0 to 65532. In this case, the value of the contact areas of the two points can be converted into a corresponding voltage value by an equation (12).$\begin{matrix}VOLTAGE \\ VALUE \left(V\right)\end{matrix} = \frac{\begin{matrix}CONTACT AREA OF TWO POINTS \\ \left(AD VALUE\right)\end{matrix}}{2 \times 2 \times 16383} \times 5 \left(V\right)$

In the simulation, the straight line EF passing through the point E and parallel to the straight line AC or the straight line BD was generated as a correction formula, and the distance between two points and the contact area of the two points of the intersection F between the correction formula and the straight line AB were measured. The results of the simulation are illustrated in Table 1.

**[Table 1]**

| | CONTACT AREAS OF TWO POINTS (AD CONVERTER VALUE) | VOLTAGE (V) CORRESPONDING TO CONTACT AREAS OF TWO POINTS | DISTANCE BETWEEN TWO POINTS |
|---|---|---|---|
| POINT A | 23316 | 1.779 | 3974 |
| POINT B | 27938 | 2.132 | 12374 |
| POINT C | 33508 | 2.557 | 5432 |
| POINT D | 38130 | 2.909 | 13832 |
| POINT E | 30000 | 2.289 | 8000 |
| POINT F | 25150 | 1.919 | 7306 |

From the results of the simulation, the distance between two points (i.e., the distance between two points of the point E) when the two points are input by the finger is 8000, and the distance between two points (i.e., the distance between two points of the point F) when the two points are input by the pen having the tip of 2 mm in diameter φ is 7306. Therefore, it is understood that when the distance between two points of the point E is corrected as the distance between two points of the intersection point F, about 8.7 % (= 1 - 7306/8000) of the actual measured value can be reduced. Therefore, it is possible to suppress the distance between two points when the two points are input by the finger from becoming greater than the actual distance. That is, the deviation of the distance between two points due to the contact area can be suppressed.

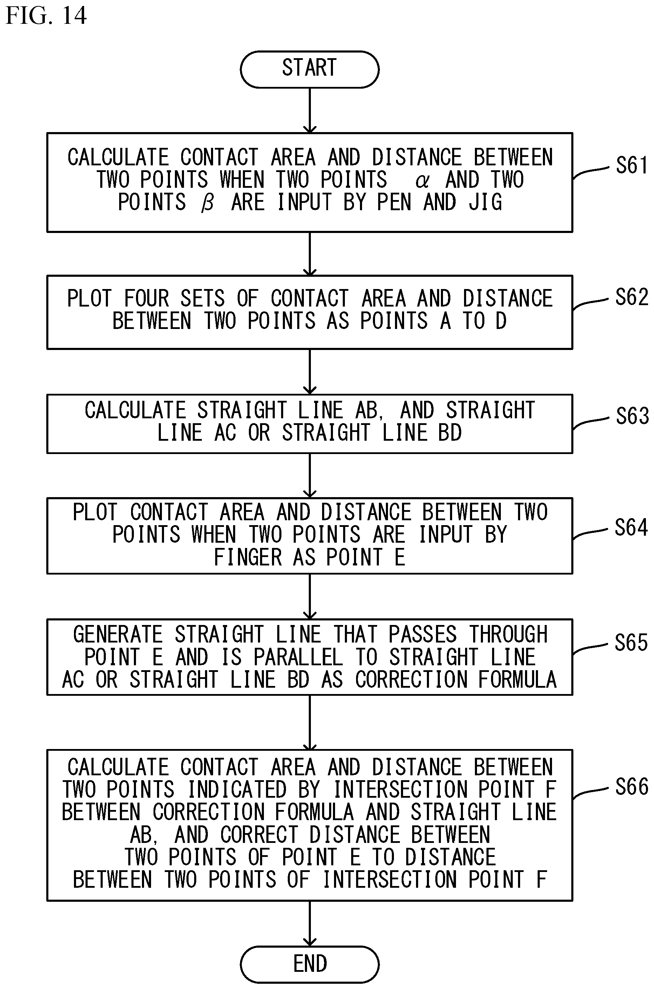

FIG. 14 is a flowchart illustrating the process of correcting the distance between two points in S10 of FIG. 2. As a premise, the computer 40 displays two points α and two points β as input positions of two-point input on the display device disposed under the touch panel 50 as illustrated in FIG. 11.

The CPU 31 calculates the contact area and the distance between two points when the two points α of FIG. 11 are input by the pen having the tip of 2 mm in diameter φ, the contact area and the distance between two points when the two points β are input by the pen having the tip of 2 mm in diameter φ, the contact area and the distance between two points when the two points α are input by the jig having the tip of 22 mm in diameter φ, and the contact area and the distance between two points when the two points β are input by the jig having the tip of 22 mm in diameter φ (S61). The distance between two points is calculated in the same manner as in S9 of FIG. 2. The contact area of each point of the two-point input is set to the total value of the voltages Vx2 and Vx1, and the total value of the contact areas of the two points is set to double the total value of the voltages Vx2 and Vx1, as in S28 of FIG. 7.

Next, in a coordinate system in which the contact area and the distance between two points are respectively set as the X-axis and the Y-axis or the Y-axis and the X-axis, the CPU 31 plots the contact area and the distance between two points when the two points α calculated in S61 are inputted by the pen having the tip of 2 mm in diameter φ, the contact area and the distance between two points when the two points β are inputted by the pen having the tip of 2 mm in diameter φ, the contact area and the distance between two points when the two points α are inputted by the jig having the tip of 22 mm in diameter φ, and the contact area and the distance between two points when the two points β are inputted by the jig having the tip of 22 mm in diameter φ, as the points A to D, respectively(S62).

The CPU 31 calculates the straight line AB (first straight line) passing through the point A (first point) and the point B (second point), and the straight line AC (second straight line) passing through the point A and the point C (third point) or the straight line BD (second straight line) passing through the point B and the point D (fourth point) (S63). The CPU 31 plots the contact area and the distance between two points when the two points are input by the finger as the point E (fifth point) (S64). The two points inputted by the finger are two points freely selected, and may be other than the two points α and the two points β, or may be the same as the two points α or the two points β.

The CPU 31 generates the straight line (i.e., straight line EF in FIG. 12) that passes through the point E and is parallel to the straight line AC or the straight line BD as the correction formula (S65). The CPU 31 calculates the contact area and the distance between two points indicated by the intersection point F between the correction formula and the straight line AB, and corrects the distance between two points of the point E as the distance between two points indicated by the intersection point F between the correction formula and the straight line AB (S66), and ends the process.

As described above, based on the contact area and the distance between two points of two-point input by each of a plurality of input units (for example, the finger, the pen having the tip of 2 mm in diameter φ and the jig having the tip of 22 mm in diameter φ), the CPU 31 corrects the distance between two points when the two points are input by one (for example, the finger) of the plurality of input units having a tip with a diameter larger than the diameter of the tip of another (for example, the pen having the tip of 2 mm in diameter φ) of the plurality of input units and smaller than the diameter of the tip of the other (for example, the jig having the tip of 22 mm in diameter φ) of the plurality of input units to the distance between two points when two points are input by the another (for example, the pen having the tip of 2 mm in diameter φ) of the plurality of input units. This makes it possible to suppress the distance between two points when the two points are input by the one (for example, the finger) of the plurality of input units from becoming greater than the actual distance. That is, the deviation of the distance between two points due to the contact area can be suppressed. Since the coordinates of the two points are calculated using the distance between two points, the accuracy of the coordinates of the two points can be improved.

Since the correction formula is generated using the contact area of the two points and the distance between two points when the input is made by the pen having a contact area smaller than the contact area of the finger and the jig having the contact area larger than the contact area of the finger, the inclination of the correction formula is more appropriate than that of the correction formula in the case where only the pen having the contact area smaller than the contact area of the finger is used or only the jig having the contact area larger than the contact area of the finger is used, and the correction formula can be generated that can make the distance between two points when two points are input by the finger closer to the actual distance.

## Claims

1. A touch panel (100) including a first resistive film (10) having a first electrode (12) and a second electrode (14) provided at both ends in a first direction, and a second resistive film (20) having a third electrode (22) and a fourth electrode (24) provided at both ends in a second direction perpendicular to the first direction, the touch panel configured to detect contact between the first resistive film and the second resistive film caused by pressing the first resistive film, and to output a pressed position, the touch panel comprising:
a first detection unit (31) configured to detect a contact area between the first resistive film and the second resistive film in pressing the first resistive film;
a second detection unit (31) configured to detect a distance between two points when the two points are pressed on the first resistive film; and
a correction unit (31) configured to correct a detected distance between the two points in accordance with a detected contact area,
**characterised in that** the correction unit is configured to correct, based on the contact area of the two points and the distance between the two points when the two points are pressed by each of a plurality of input units having different diameters of the tips, the distance between the two points when the two points are pressed by one of the plurality of input units having a tip with a diameter larger than a diameter of a tip of another of the plurality of input units and smaller than a diameter of a tip of the other of the plurality of input units to the distance between the two points when the two points are pressed by the another of the plurality of input units.

2. The touch panel according to claim 1, further comprising:
a plurality of switches (SW1 - SW12) connected to the first to fourth electrodes; and
a measurement unit (31) configured to control the plurality of switches so as to apply a voltage to the first electrode and the second electrode and ground the third electrode, measure a first voltage value applied to the fourth electrode, control the plurality of switches so as to apply a voltage to the first electrode and the second electrode and ground the fourth electrode, and measure a second voltage value applied to the third electrode;
wherein the first detection unit includes a determination unit configured to determine, when two points are pressed on the first resistive film, a value twice the total of the first voltage value and the second voltage value as a value corresponding to a contact area of the two points, and
the second detection unit includes a calculation unit configured to control the plurality of switches so that the first electrode is at a high potential and the second electrode is at a low potential, apply a voltage to the first resistive film through a first voltage dividing resistor, measure a first direction voltage applied to the first resistive film in the first direction when the two points are pressed, control the plurality of switches so that the third electrode is at a high potential and the fourth electrode is at a low potential, apply a voltage to the second resistive film through a second voltage dividing resistor, measure a second direction voltage applied to the second resistive film in the second direction when the two points are pressed, and calculate the distance between the two points based on the first direction voltage and the second direction voltage.

3. The touch panel according to claim 2, wherein
the plurality of input units include a first input unit having a tip with a first diameter and a second input unit having a tip with a second diameter larger than the first diameter,
the one of the plurality of input units is a third input unit having a tip with a third diameter larger than the first diameter and smaller than the second diameter,
the correction unit is configured to generate a correction formula for correcting the distance between the two points when the two points are pressed by the third input unit, based on the contact area of the two points and the distance between the two points when the two points are pressed by the first input unit, and the contact area of the two points and the distance between the two points when the two points are pressed by the second input unit, and to correct the distance between the two points when the two points are pressed by the third input unit to the distance between the two points when the two points are pressed by the first input unit, based on the correction formula.

4. The touch panel according to claim 2, wherein
the plurality of input units include a first input unit having a tip with a first diameter and a second input unit having a tip with a second diameter larger than the first diameter,
the one of the plurality of input units is a third input unit having a tip with a third diameter larger than the first diameter and smaller than the second diameter,
the contact area of the two points and the distance between the two points when the two points are pressed by the first input unit include a contact area and a distance between the two points of first two points, and a contact area and a distance between the two points of second two points, the second two points being arranged in the same direction as the first two points and having a distance between the two points larger than the first two points,
the contact area and the distance between the two points when the two points are pressed by the second input unit include a contact area and a distance between the two points when the first two points are pressed by the second input unit, and a contact area and a distance between the two points when the second two points are pressed by the second input unit,
in a coordinate system in which the contact area and the distance between the two points are respectively set as an X axis and a Y axis or a Y axis and an X axis, the correction unit is configured to generate, based on a first straight line that passes through a first point indicating the contact area and the distance between the two points of the first two points when the two points are pressed by the first input unit and a second point indicating the contact area and the distance between the two points of the second two points when the two points are pressed by the first input unit, and a second straight line that passes through the first point and a third point indicating the contact area and the distance between the two points when the first two points are pressed by the second input unit or passes through the second point and a fourth point indicating the contact area and the distance between the two points when the second two points are pressed by the second input unit, a third straight line that passes through a fifth point indicating the contact area and the distance between two points when the two points are pressed by the third input unit and is parallel to the second straight line, as a correction formula, and
the correction unit is configured to correct the distance between the two points when the two points are pressed by the third input unit to the distance between the two points indicated by an intersection point between the first straight line and the correction formula.

5. A method for controlling a touch panel (100) including a first resistive film (10) having a first electrode (12) and a second electrode (14) provided at both ends in a first direction, a second resistive film (20) having a third electrode (22) and a fourth electrode (24) provided at both ends in a second direction perpendicular to the first direction, a plurality of switches (SW1 - SW12) connected to the first to fourth electrodes, and a controller (31) that controls the plurality of switches, the method for controlling the touch panel comprising:
controlling the plurality of switches so as to apply a voltage to the first electrode and the second electrode and ground the third electrode, measuring a first voltage value applied to the fourth electrode when two points are pressed on the first resistive film, controlling the plurality of switches so as to apply a voltage to the first electrode and the second electrode and ground the fourth electrode, and measuring a second voltage value applied to the third electrode when two points are pressed on the first resistive film;
determining a value twice the total of the first voltage value and the second voltage value as a value corresponding to a contact area of the two points when two points are pressed on the first resistive film;
controlling the plurality of switches so that the first electrode is at a high potential and the second electrode is at a low potential, applying a voltage to the first resistive film via a first voltage dividing resistor, measuring a first direction voltage applied to the first resistive film in the first direction when the two points are pressed, controlling the plurality of switches so that the third electrode is at a high potential and the fourth electrode is at a low potential, applying a voltage to the second resistive film via a second voltage dividing resistor, measuring a second direction voltage applied to the second resistive film in the second direction when the two points are pressed, and calculating a distance between the two points based on the first direction voltage and the second direction voltage; and
**characterised by** correcting, based on the contact area of the two points and the distance between the two points when the two points are pressed by each of a plurality of input units, the distance between the two points when the two points are pressed by one of the plurality of input units having a tip with a diameter larger than a diameter of a tip of another of the plurality of input units and smaller than a diameter of a tip of the other of the plurality of input units to the distance between the two points when the two points are pressed by the another of the plurality of input units.

6. A computer program product for controlling a touch panel (100) executed by a controller (31) included in the touch panel to execute a process, the touch panel including a first resistive film (10) having a first electrode (12) and a second electrode (14) provided at both ends in a first direction, a second resistive film (20) having a third electrode (22) and a fourth electrode (24) provided at both ends in a second direction perpendicular to the first direction, a plurality of switches(SW1 - SW12) connected to the first to fourth electrodes, and the controller that controls the plurality of switches, the process comprising:
controlling the plurality of switches so as to apply a voltage to the first electrode and the second electrode and ground the third electrode, measuring a first voltage value applied to the fourth electrode when two points are pressed on the first resistive film, controlling the plurality of switches so as to apply a voltage to the first electrode and the second electrode and ground the fourth electrode, and measuring a second voltage value applied to the third electrode when two points are pressed on the first resistive film;
determining a value twice the total of the first voltage value and the second voltage value as a value corresponding to a contact area of the two points when two points are pressed on the first resistive film;
controlling the plurality of switches so that the first electrode is at a high potential and the second electrode is at a low potential, applying a voltage to the first resistive film via a first voltage dividing resistor, measuring a first direction voltage applied to the first resistive film in the first direction when the two points are pressed, controlling the plurality of switches so that the third electrode is at a high potential and the fourth electrode is at a low potential, applying a voltage to the second resistive film via a second voltage dividing resistor, measuring a second direction voltage applied to the second resistive film in the second direction when the two points are pressed, and calculating a distance between the two points based on the first direction voltage and the second direction voltage; and
**characterised by** correcting, based on the contact area of the two points and the distance between the two points when the two points are pressed by each of a plurality of input units, the distance between the two points when the two points are pressed by one of the plurality of input units having a tip with a diameter larger than a diameter of a tip of another of the plurality of input units and smaller than a diameter of a tip of the other of the plurality of input units to the distance between the two points when the two points are pressed by the another of the plurality of input units.

## Patentansprüche

1. Berührungsbildschirm (100), der einen ersten Widerstandsfilm (10), der eine erste Elektrode (12) und eine zweite Elektrode (14) aufweist, die an beiden Enden in einer ersten Richtung bereitgestellt sind, und einen zweiten Widerstandsfilm (20), der eine dritte Elektrode (22) und eine vierte Elektrode (24) aufweist, die an beiden Enden in einer zweiten Richtung senkrecht zu der ersten Richtung bereitgestellt sind, beinhaltet, wobei der Berührungsbildschirm konfiguriert ist, um einen Kontakt zwischen dem ersten Widerstandsfilm und dem zweiten Widerstandsfilm, der durch Drücken des ersten Widerstandsfilms verursacht wird, zu erfassen und eine gedrückte Position auszugeben, wobei der Berührungsbildschirm Folgendes umfasst:
eine erste Erfassungseinheit (31), die konfiguriert ist, um eine Kontaktfläche zwischen dem ersten Widerstandsfilm und dem zweiten Widerstandsfilm beim Drücken des ersten Widerstandsfilms zu erfassen;
eine zweite Erfassungseinheit (31), die konfiguriert ist, um einen Abstand zwischen zwei Punkten zu erfassen, wenn die zwei Punkte auf dem ersten Widerstandsfilm gedrückt werden; und
eine Korrektureinheit (31), die konfiguriert ist, um einen erfassten Abstand zwischen den zwei Punkten gemäß einer erfassten Kontaktfläche zu korrigieren,
**dadurch gekennzeichnet, dass** die Korrektureinheit konfiguriert ist, um basierend auf der Kontaktfläche der zwei Punkte und dem Abstand zwischen den zwei Punkten, wenn die zwei Punkte durch jede einer Vielzahl von Eingabeeinheiten, die unterschiedliche Durchmesser der Spitzen aufweist, gedrückt werden, den Abstand zwischen den zwei Punkten, wenn die zwei Punkte durch eine der Vielzahl von Eingabeeinheiten gedrückt werden, die eine Spitze mit einem Durchmesser aufweist, der größer als ein Durchmesser einer Spitze einer anderen der Vielzahl von Eingabeeinheiten und kleiner als ein Durchmesser einer Spitze der anderen der Vielzahl von Eingabeeinheiten ist, auf den Abstand zwischen den zwei Punkten, wenn die zwei Punkte durch die andere der Vielzahl von Eingabeeinheiten gedrückt werden, zu korrigieren.

2. Berührungsbildschirm nach Anspruch 1, ferner umfassend:
eine Vielzahl von Schaltern (SW1-SW12), die mit der ersten bis vierten Elektrode verbunden ist; und
eine Messeinheit (31), die konfiguriert ist, um die Vielzahl von Schaltern zu steuern, um eine Spannung an die erste Elektrode und die zweite Elektrode anzulegen und die dritte Elektrode zu erden, einen an die vierte Elektrode angelegten ersten Spannungswert zu messen, die Vielzahl von Schaltern zu steuern, um eine Spannung an die erste Elektrode und die zweite Elektrode anzulegen und die vierte Elektrode zu erden, und einen an die dritte Elektrode angelegten zweiten Spannungswert zu messen;
wobei die erste Erfassungseinheit eine Bestimmungseinheit beinhaltet, die konfiguriert ist, um einen Wert, der doppelt so groß ist wie die Summe aus dem ersten Spannungswert und dem zweiten Spannungswert, als einen Wert zu bestimmen, der einer Kontaktfläche der zwei Punkte entspricht, wenn zwei Punkte auf dem ersten Widerstandsfilm gedrückt werden, und
die zweite Erfassungseinheit eine Berechnungseinheit beinhaltet, die konfiguriert ist, um die Vielzahl von Schaltern derart zu steuern, dass die erste Elektrode auf einem hohen Potential liegt und die zweite Elektrode auf einem niedrigen Potential liegt, eine Spannung über einen ersten Spannungsteilungswiderstand an den ersten Widerstandsfilm anzulegen, eine erste Richtungsspannung, die an den ersten Widerstandsfilm in der ersten Richtung angelegt wird, wenn die zwei Punkte gedrückt werden, zu messen, die Vielzahl von Schaltern derart zu steuern, dass die dritte Elektrode auf einem hohen Potential liegt und die vierte Elektrode auf einem niedrigen Potential liegt, eine Spannung über einen zweiten Spannungsteilungswiderstand an den zweiten Widerstandsfilm anzulegen, eine zweite Richtungsspannung, die an den zweiten Widerstandsfilm in der zweiten Richtung angelegt wird, wenn die zwei Punkte gedrückt werden, zu messen und den Abstand zwischen den zwei Punkten basierend auf der ersten Richtungsspannung und der zweiten Richtungsspannung zu berechnen.

3. Berührungsbildschirm nach Anspruch 2, wobei
die Vielzahl von Eingabeeinheiten eine erste Eingabeeinheit, die eine Spitze mit einem ersten Durchmesser aufweist, und eine zweite Eingabeeinheit, die eine Spitze mit einem zweiten Durchmesser aufweist, der größer als der erste Durchmesser ist, beinhaltet,
die eine der Vielzahl von Eingabeeinheiten eine dritte Eingabeeinheit ist, die eine Spitze mit einem dritten Durchmesser aufweist, der größer als der erste Durchmesser und kleiner als der zweite Durchmesser ist,
die Korrektureinheit konfiguriert ist, um eine Korrekturformel zum Korrigieren des Abstands zwischen den zwei Punkten, wenn die zwei Punkte durch die dritte Eingabeeinheit gedrückt werden, basierend auf der Kontaktfläche der zwei Punkte und dem Abstand zwischen den zwei Punkten, wenn die zwei Punkte durch die erste Eingabeeinheit gedrückt werden, und der Kontaktfläche der zwei Punkte und dem Abstand zwischen den zwei Punkten, wenn die zwei Punkte durch die zweite Eingabeeinheit gedrückt werden, zu generieren und den Abstand zwischen den zwei Punkten, wenn die zwei Punkte durch die dritte Eingabeeinheit gedrückt werden, auf den Abstand zwischen den zwei Punkten, wenn die zwei Punkte durch die erste Eingabeeinheit gedrückt werden, basierend auf der Korrekturformel zu korrigieren.

4. Berührungsbildschirm nach Anspruch 2, wobei
die Vielzahl von Eingabeeinheiten eine erste Eingabeeinheit, die eine Spitze mit einem ersten Durchmesser aufweist, und eine zweite Eingabeeinheit, die eine Spitze mit einem zweiten Durchmesser aufweist, der größer als der erste Durchmesser ist, beinhaltet,
die eine der Vielzahl von Eingabeeinheiten eine dritte Eingabeeinheit ist, die eine Spitze mit einem dritten Durchmesser aufweist, der größer als der erste Durchmesser und kleiner als der zweite Durchmesser ist,
die Kontaktfläche der zwei Punkte und der Abstand zwischen den zwei Punkten, wenn die zwei Punkte durch die erste Eingabeeinheit gedrückt werden, eine Kontaktfläche und einen Abstand zwischen den zwei Punkten der ersten zwei Punkte und eine Kontaktfläche und einen Abstand zwischen den zwei Punkten der zweiten zwei Punkte beinhalten, wobei die zweiten zwei Punkte in der gleichen Richtung wie die ersten zwei Punkte angeordnet sind und einen größeren Abstand zwischen den zwei Punkten aufweisen als die ersten zwei Punkte,
die Kontaktfläche und der Abstand zwischen den zwei Punkten, wenn die zwei Punkte durch die zweite Eingabeeinheit gedrückt werden, eine Kontaktfläche und einen Abstand zwischen den zwei Punkten, wenn die ersten zwei Punkte durch die zweite Eingabeeinheit gedrückt werden, und eine Kontaktfläche und einen Abstand zwischen den zwei Punkten, wenn die zweiten zwei Punkte durch die zweite Eingabeeinheit gedrückt werden, beinhalten,
wobei in einem Koordinatensystem, in dem die Kontaktfläche und der Abstand zwischen den zwei Punkten jeweils als X-Achse und Y-Achse oder als Y-Achse und X-Achse festgelegt sind, die Korrektureinheit konfiguriert ist, um basierend auf einer ersten Geraden, die durch einen ersten Punkt, der die Kontaktfläche und den Abstand zwischen den zwei Punkten der ersten zwei Punkte angibt, wenn die zwei Punkte durch die erste Eingabeeinheit gedrückt werden, und einen zweiten Punkt, der die Kontaktfläche und den Abstand zwischen den zwei Punkten der zweiten zwei Punkte angibt, wenn die zwei Punkte durch die erste Eingabeeinheit gedrückt werden, verläuft und einer zweiten Geraden, die durch den ersten Punkt und einen dritten Punkt verläuft, der die Kontaktfläche und den Abstand zwischen den zwei Punkten angibt, wenn die ersten zwei Punkte durch die zweite Eingabeeinheit gedrückt werden, oder durch den zweiten Punkt und einen vierten Punkt verläuft, der die Kontaktfläche und den Abstand zwischen den zwei Punkten angibt, wenn die zweiten zwei Punkte durch die zweite Eingabeeinheit gedrückt werden, eine dritte Gerade, die durch einen fünften Punkt verläuft, der die Kontaktfläche und den Abstand zwischen zwei Punkten angibt, wenn die zwei Punkte durch die dritte Eingabeeinheit gedrückt werden, und die parallel zu der zweiten Geraden ist, als Korrekturformel zu generieren und
die Korrektureinheit konfiguriert ist, um den Abstand zwischen den zwei Punkten, wenn die zwei Punkte durch die dritte Eingabeeinheit gedrückt werden, auf den Abstand zwischen den zwei Punkten, der durch einen Schnittpunkt zwischen der ersten Geraden und der Korrekturformel angegeben wird, zu korrigieren.

5. Verfahren zur Steuerung eines Berührungsbildschirms (100), der einen ersten Widerstandsfilm (10), der eine erste Elektrode (12) und eine zweite Elektrode (14) aufweist, die an beiden Enden in einer ersten Richtung bereitgestellt sind, einen zweiten Widerstandsfilm (20), der eine dritte Elektrode (22) und eine vierte Elektrode (24) aufweist, die an beiden Enden in einer zweiten Richtung senkrecht zu der ersten Richtung bereitgestellt sind, eine Vielzahl von Schaltern (SW1-SW12), die mit der ersten bis vierten Elektrode verbunden ist, und eine Steuerung (31), die die Vielzahl von Schaltern steuert, beinhaltet, wobei das Verfahren zur Steuerung des Berührungsbildschirms Folgendes umfasst:
Steuern der Vielzahl von Schaltern, um eine Spannung an die erste Elektrode und die zweite Elektrode anzulegen und die dritte Elektrode zu erden, Messen eines an die vierte Elektrode angelegten ersten Spannungswerts, wenn zwei Punkte auf dem ersten Widerstandsfilm gedrückt werden, Steuern der Vielzahl von Schaltern, um eine Spannung an die erste Elektrode und die zweite Elektrode anzulegen und die vierte Elektrode zu erden, und Messen eines an die dritte Elektrode angelegten zweiten Spannungswerts, wenn zwei Punkte auf dem ersten Widerstandsfilm gedrückt werden;
Bestimmen eines Werts, der doppelt so groß ist wie die Summe aus dem ersten Spannungswert und dem zweiten Spannungswert, als einen Wert, der einer Kontaktfläche der zwei Punkte entspricht, wenn zwei Punkte auf dem ersten Widerstandsfilm gedrückt werden; Steuern der Vielzahl von Schaltern derart, dass die erste Elektrode auf einem hohen Potential liegt und die zweite Elektrode auf einem niedrigen Potential liegt, Anlegen einer Spannung über einen ersten Spannungsteilungswiderstand an den ersten Widerstandsfilm, Messen einer ersten Richtungsspannung, die an den ersten Widerstandsfilm in der ersten Richtung angelegt wird, wenn die zwei Punkte gedrückt werden, Steuern der Vielzahl von Schaltern derart, dass die dritte Elektrode auf einem hohen Potential liegt und die vierte Elektrode auf einem niedrigen Potential liegt, Anlegen einer Spannung über einen zweiten Spannungsteilungswiderstand an den zweiten Widerstandsfilm, Messen einer zweiten Richtungsspannung, die an den zweiten Widerstandsfilm in der zweiten Richtung angelegt wird, wenn die zwei Punkte gedrückt werden, und Berechnen eines Abstands zwischen den zwei Punkten basierend auf der ersten Richtungsspannung und der zweiten Richtungsspannung; und
**gekennzeichnet durch** Korrigieren, basierend auf der Kontaktfläche der zwei Punkte und dem Abstand zwischen den zwei Punkten, wenn die zwei Punkte durch jede einer Vielzahl von Eingabeeinheiten gedrückt werden, des Abstands zwischen den zwei Punkten, wenn die zwei Punkte durch eine der Vielzahl von Eingabeeinheiten gedrückt werden, die eine Spitze mit einem Durchmesser aufweist, der größer als ein Durchmesser einer Spitze einer anderen der Vielzahl von Eingabeeinheiten und kleiner als ein Durchmesser einer Spitze der anderen der Vielzahl von Eingabeeinheiten ist, auf den Abstand zwischen den zwei Punkten, wenn die zwei Punkte durch die andere der Vielzahl von Eingabeeinheiten gedrückt werden.

6. Computerprogrammprodukt zur Steuerung eines Berührungsbildschirms (100), das durch eine Steuerung (31) ausgeführt wird, die in dem Berührungsbildschirm beinhaltet ist, um einen Vorgang auszuführen, wobei der Berührungsbildschirm einen ersten Widerstandsfilm (10), der eine erste Elektrode (12) und eine zweite Elektrode (14) aufweist, die an beiden Enden in einer ersten Richtung bereitgestellt sind, einen zweiten Widerstandsfilm (20), der eine dritte Elektrode (22) und eine vierte Elektrode (24) aufweist, die an beiden Enden in einer zweiten Richtung senkrecht zu der ersten Richtung bereitgestellt sind, eine Vielzahl von Schaltern (SW1 - SW12), die mit der ersten bis vierten Elektrode verbunden ist, und die Steuerung, die die Vielzahl von Schaltern steuert, beinhaltet, wobei der Vorgang Folgendes umfasst:
Steuern der Vielzahl von Schaltern, um eine Spannung an die erste Elektrode und die zweite Elektrode anzulegen und die dritte Elektrode zu erden, Messen eines an die vierte Elektrode angelegten ersten Spannungswerts, wenn zwei Punkte auf dem ersten Widerstandsfilm gedrückt werden, Steuern der Vielzahl von Schaltern, um eine Spannung an die erste Elektrode und die zweite Elektrode anzulegen und die vierte Elektrode zu erden, und Messen eines an die dritte Elektrode angelegten zweiten Spannungswerts, wenn zwei Punkte auf dem ersten Widerstandsfilm gedrückt werden;
Bestimmen eines Werts, der doppelt so groß ist wie die Summe aus dem ersten Spannungswert und dem zweiten Spannungswert, als einen Wert, der einer Kontaktfläche der zwei Punkte entspricht, wenn zwei Punkte auf dem ersten Widerstandsfilm gedrückt werden;
Steuern der Vielzahl von Schaltern derart, dass die erste Elektrode auf einem hohen Potential liegt und die zweite Elektrode auf einem niedrigen Potential liegt, Anlegen einer Spannung über einen ersten Spannungsteilungswiderstand an den ersten Widerstandsfilm, Messen einer ersten Richtungsspannung, die an den ersten Widerstandsfilm in der ersten Richtung angelegt wird, wenn die zwei Punkte gedrückt werden, Steuern der Vielzahl von Schaltern derart, dass die dritte Elektrode auf einem hohen Potential liegt und die vierte Elektrode auf einem niedrigen Potential liegt, Anlegen einer Spannung über einen zweiten Spannungsteilungswiderstand an den zweiten Widerstandsfilm, Messen einer zweiten Richtungsspannung, die an den zweiten Widerstandsfilm in der zweiten Richtung angelegt wird, wenn die zwei Punkte gedrückt werden, und Berechnen eines Abstands zwischen den zwei Punkten basierend auf der ersten Richtungsspannung und der zweiten Richtungsspannung; und
**gekennzeichnet durch** Korrigieren, basierend auf der Kontaktfläche der zwei Punkte und dem Abstand zwischen den zwei Punkten, wenn die zwei Punkte durch jede einer Vielzahl von Eingabeeinheiten gedrückt werden, des Abstands zwischen den zwei Punkten, wenn die zwei Punkte durch eine der Vielzahl von Eingabeeinheiten gedrückt werden, die eine Spitze mit einem Durchmesser aufweist, der größer als ein Durchmesser einer Spitze einer anderen der Vielzahl von Eingabeeinheiten und kleiner als ein Durchmesser einer Spitze der anderen der Vielzahl von Eingabeeinheiten ist, auf den Abstand zwischen den zwei Punkten, wenn die zwei Punkte durch die andere der Vielzahl von Eingabeeinheiten gedrückt werden.

## Revendications

1. Panneau tactile (100) comportant un premier film résistif (10) ayant une première électrode (12) et une deuxième électrode (14) prévues au niveau des deux extrémités dans une première direction, et un second film résistif (20) ayant une troisième électrode (22) et une quatrième électrode (24) prévues au niveau des deux extrémités dans une seconde direction perpendiculaire à la première direction, le panneau tactile étant configuré pour détecter le contact entre le premier film résistif et le second film résistif provoqué par une pression sur le premier film résistif, et pour produire une position de pression, le panneau tactile comprenant :
une première unité de détection (31) configurée pour détecter une zone de contact entre le premier film résistif et le second film résistif lors de la pression sur le premier film résistif ;
une seconde unité de détection (31) configurée pour détecter une distance entre deux points lorsque les deux points sont pressés sur le premier film résistif ; et
une unité de correction (31) configurée pour corriger une distance détectée entre les deux points en fonction d'une zone de contact détectée,
**caractérisé en ce que** l'unité de correction est configurée pour corriger, sur la base de la zone de contact des deux points et de la distance entre les deux points lorsque les deux points sont pressés par chacune d'une pluralité d'unités d'entrée ayant différents diamètres des pointes, la distance entre les deux points lorsque les deux points sont pressés par l'une de la pluralité d'unités d'entrée ayant une pointe avec un diamètre supérieur à un diamètre d'une pointe d'une autre de la pluralité d'unités d'entrée et inférieur à un diamètre d'une pointe de l'autre de la pluralité d'unités d'entrée à la distance entre les deux points lorsque les deux points sont pressés par une autre de la pluralité d'unités d'entrée.

2. Panneau tactile selon la revendication 1, comprenant en outre :
une pluralité de commutateurs (SW1 à SW12) connectés aux première à quatrième électrodes ; et
une unité de mesure (31) configurée pour commander la pluralité de commutateurs de manière à appliquer une tension à la première électrode et à la deuxième électrode et à mettre à la terre la troisième électrode, mesurer une première valeur de tension appliquée à la quatrième électrode, commander la pluralité de commutateurs de manière à appliquer une tension à la première électrode et à la deuxième électrode et à mettre à la terre la quatrième électrode, et mesurer une seconde valeur de tension appliquée à la troisième électrode ;
dans lequel la première unité de détection comporte une unité de détermination configurée pour déterminer, lorsque deux points sont pressés sur le premier film résistif, une valeur égale au double du total de la première valeur de tension et de la seconde valeur de tension en tant que valeur correspondant à une zone de contact des deux points, et
la seconde unité de détection comporte une unité de calcul configurée pour commander la pluralité de commutateurs de sorte que la première électrode est à un potentiel élevé et la deuxième électrode est à un potentiel faible, appliquer une tension au premier film résistif à travers une première résistance diviseuse de tension, mesurer une tension de première direction appliquée au premier film résistif dans la première direction lorsque les deux points sont pressés, commander la pluralité de commutateurs de sorte que la troisième électrode est à un potentiel élevé et la quatrième est à un potentiel faible, appliquer une tension au second film résistif à travers une seconde résistance diviseuse de tension, mesurer une tension de seconde direction appliquée au second film résistif dans la seconde direction lorsque les deux points sont pressés et calculer la distance entre les deux points sur la base de la tension de première direction et de la tension de seconde direction.

3. Panneau tactile selon la revendication 2, dans lequel
la pluralité d'unités d'entrée comportent une première unité d'entrée ayant une pointe avec un premier diamètre et une deuxième unité d'entrée ayant une pointe avec un deuxième diamètre supérieur au premier diamètre,
l'une de la pluralité d'unités d'entrée est une troisième unité d'entrée ayant une pointe avec un troisième diamètre supérieur au premier diamètre et inférieur au deuxième diamètre,
l'unité de correction est configurée pour générer une formule de correction pour corriger la distance entre deux points lorsque les deux points sont pressés par la troisième unité d'entrée, sur la base de la zone de contact des deux points et de la distance entre les deux points lorsque les deux points sont pressés par la première unité d'entrée, et de la zone de contact des deux points et de la distance entre les deux points lorsque les deux points sont pressés par la deuxième unité d'entrée, et pour corriger la distance entre les deux points lorsque les deux points sont pressés par la troisième unité d'entrée à la distance entre les deux points lorsque les deux points sont pressés par la première unité d'entrée, sur la base de la formule de correction.

4. Panneau tactile selon la revendication 2, dans lequel
la pluralité d'unités d'entrée comportent une première unité d'entrée ayant une pointe avec un premier diamètre et une deuxième unité d'entrée ayant une pointe avec un deuxième diamètre supérieur au premier diamètre,
l'une de la pluralité d'unités d'entrée est une troisième unité d'entrée ayant une pointe avec un troisième diamètre supérieur au premier diamètre et inférieur au deuxième diamètre,
la zone de contact des deux points et la distance entre les deux points lorsque les deux points sont pressés par la première unité d'entrée comportent une zone de contact et une distance entre les deux points de premiers deux points, et une zone de contact et une distance entre les deux points de seconds deux points, les seconds deux points étant agencés dans la même direction que les premiers deux points et ayant une distance entre les deux points supérieure à celle des premiers deux points,
la zone de contact et la distance entre les deux points lorsque les deux points sont pressés par la deuxième unité d'entrée comportent une zone de contact et une distance entre les deux points lorsque les premiers deux points sont pressés par la deuxième unité d'entrée, et une zone de contact et une distance entre les deux points lorsque les seconds deux points sont pressés par la deuxième unité d'entrée,
dans un système de coordonnées dans lequel la zone de contact et la distance entre les deux points sont respectivement définies comme un axe X et un axe Y ou un axe Y et un axe X, l'unité de correction est configurée pour générer,
sur la base d'une première ligne droite qui passe à travers un premier point indiquant la zone de contact et la distance entre les deux points des premiers deux points lorsque les deux points sont pressés par la première unité d'entrée et un deuxième point indiquant la zone de contact et la distance entre les deux points des seconds deux points lorsque les deux points sont pressés par la première unité d'entrée, et d'une deuxième ligne droite qui passe à travers le premier point et un troisième point indiquant la zone de contact et la distance entre les deux points lorsque les premiers deux points sont pressés par la deuxième unité d'entrée ou qui passe à travers le deuxième point et un quatrième point indiquant la zone de contact et la distance entre les deux points lorsque les seconds deux points sont pressés par la deuxième unité d'entrée, une troisième ligne droite qui passe à travers un cinquième point indiquant la zone de contact et la distance entre deux points lorsque les deux points sont pressés par la troisième unité d'entrée et est parallèle à la deuxième ligne droite, en tant que formule de correction, et
l'unité de correction est configurée pour corriger la distance entre les deux points lorsque les deux points sont pressés par la troisième unité d'entrée à la distance entre les deux points indiquée par un point d'intersection entre la première ligne droite et la formule de correction.

5. Procédé de commande d'un panneau tactile (100) comportant un premier film résistif (10) ayant une première électrode (12) et une deuxième électrode (14) prévues au niveau des deux extrémités dans une première direction, un second film résistif (20) ayant une troisième électrode (22) et une quatrième électrode (24) prévues au niveau des deux extrémités dans une seconde direction perpendiculaire à la première direction, une pluralité de commutateurs (SW1 à SW12) connectés aux première à quatrième électrodes, et un dispositif de commande (31) qui commande la pluralité de commutateurs, le procédé commande du panneau tactile comprenant :
la commande de la pluralité de commutateurs de manière à appliquer une tension à la première électrode et à la deuxième électrode et à mettre à la terre la troisième électrode, la mesure d'une première valeur de tension appliquée à la quatrième électrode lorsque deux points sont pressés sur le premier film résistif, la commande de la pluralité de commutateurs de manière à appliquer une tension à la première électrode et à la deuxième électrode et à mettre à la terre la quatrième électrode, et la mesure d'une seconde valeur de tension appliquée à la troisième électrode lorsque deux points sont pressés sur le premier film résistif ;
la détermination d'une valeur égale au double du total de la première valeur de tension et de la seconde valeur de tension en tant que valeur correspondant à une zone de contact des deux points et lorsque deux points sont pressés sur le premier film résistif ;
la commande de la pluralité de commutateurs de sorte que la première électrode est à un potentiel élevé et la deuxième électrode est à un potentiel faible, l'application d'une tension au premier film résistif via une première résistance diviseuse de tension, la mesure d'une tension de première direction appliquée au premier film résistif dans la première direction lorsque les deux points sont pressés, la commande de la pluralité de commutateurs de sorte que la troisième électrode est à un potentiel élevé et la quatrième est à un potentiel faible, l'application d'une tension au second film résistif via une seconde résistance diviseuse de tension, la mesure d'une tension de seconde direction appliquée au second film résistif dans la seconde direction lorsque les deux points sont pressés et le calcul d'une distance entre les deux points sur la base de la tension de première direction et de la tension de seconde direction ; et
**caractérisé par** la correction, sur la base de la zone de contact des deux points et de la distance entre les deux points lorsque les deux points sont pressés par chacune d'une pluralité d'unités d'entrée, de la distance entre les deux points lorsque les deux points sont pressés par l'une de la pluralité d'unités d'entrée ayant une pointe avec un diamètre supérieur à un diamètre d'une pointe d'une autre de la pluralité d'unités d'entrée et inférieur à un diamètre d'une pointe de l'autre de la pluralité d'unités d'entrée à la distance entre les deux points lorsque les deux points sont pressés par une autre de la pluralité d'unités d'entrée.

6. Produit-programme d'ordinateur pour commander un panneau tactile (100) exécuté par un dispositif de commande (31) inclus dans le panneau tactile pour exécuter un processus, le panneau tactile comportant un premier film résistif (10) ayant une première électrode (12) et une deuxième électrode (14) prévues au niveau des deux extrémités dans une première direction, un second film résistif (20) ayant une troisième électrode (22) et une quatrième électrode (24) prévues au niveau des deux extrémités dans une seconde direction perpendiculaire à la première direction, une pluralité de commutateurs (SW1 à SW12) connectés aux première à quatrième électrodes, et le dispositif de commande qui commande la pluralité de commutateurs, le processus comprenant :
la commande de la pluralité de commutateurs de manière à appliquer une tension à la première électrode et à la deuxième électrode et à mettre à la terre la troisième électrode, la mesure d'une première valeur de tension appliquée à la quatrième électrode lorsque deux points sont pressés sur le premier film résistif, la commande de la pluralité de commutateurs de manière à appliquer une tension à la première électrode et à la deuxième électrode et à mettre à la terre la quatrième électrode, et la mesure d'une seconde valeur de tension appliquée à la troisième électrode lorsque deux points sont pressés sur le premier film résistif ;
la détermination d'une valeur égale au double du total de la première valeur de tension et de la seconde valeur de tension en tant que valeur correspondant à une zone de contact des deux points et lorsque deux points sont pressés sur le premier film résistif ;
la commande de la pluralité de commutateurs de sorte que la première électrode est à un potentiel élevé et la deuxième électrode est à un potentiel faible, l'application d'une tension au premier film résistif via une première résistance diviseuse de tension, la mesure d'une tension de première direction appliquée au premier film résistif dans la première direction lorsque les deux points sont pressés, la commande de la pluralité de commutateurs de sorte que la troisième électrode est à un potentiel élevé et la quatrième est à un potentiel faible, l'application d'une tension au second film résistif via une seconde résistance diviseuse de tension, la mesure d'une tension de seconde direction appliquée au second film résistif dans la seconde direction lorsque les deux points sont pressés et le calcul d'une distance entre les deux points sur la base de la tension de première direction et de la tension de seconde direction ; et
**caractérisé par** la correction, sur la base de la zone de contact des deux points et de la distance entre les deux points lorsque les deux points sont pressés par chacune d'une pluralité d'unités d'entrée, de la distance entre les deux points lorsque les deux points sont pressés par l'une de la pluralité d'unités d'entrée ayant une pointe avec un diamètre supérieur à un diamètre d'une pointe d'une autre de la pluralité d'unités d'entrée et inférieur à un diamètre d'une pointe de l'autre de la pluralité d'unités d'entrée à la distance entre les deux points lorsque les deux points sont pressés par une autre de la pluralité d'unités d'entrée.
